(19) Europäisches Patentamt
European Patent Office
Office européen des brevets

(11) **EP 3 513 846 B1**

(12) **FASCICULE DE BREVET EUROPEEN**

(45) Date de publication et mention de la délivrance du brevet:
**07.08.2024 Bulletin 2024/32**

(21) Numéro de dépôt: **19151725.9**

(22) Date de dépôt: **14.01.2019**

(51) Classification Internationale des Brevets (IPC):
***A63C 5/06*** (2006.01)

(52) Classification Coopérative des Brevets (CPC):
**A63C 5/06**; A63C 2203/12; A63C 2203/18

(54) **SYSTEME D'ANALYSE ET PLANCHE DE GLISSE ASSOCIEE**

ANALYSESYSTEM UND DAZU PASSENDES GLEITBRETT

SYSTEM FOR ANALYSING AND ASSOCIATED GLIDEBOARD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.01.2018 FR 1850426**

(43) Date de publication de la demande:
**24.07.2019 Bulletin 2019/30**

(73) Titulaires:
• **Skis Rossignol**
 **38430 Saint Jean de Moirans (FR)**
• **Commissariat à l'Energie Atomique et aux Energies**
 **Alternatives**
 **75015 Paris (FR)**

(72) Inventeurs:
• **PUGET, Nicolas**
 **73470 NOVALAISE (FR)**

• **VAILLI, Johan**
 **38500 COUBLEVIE (FR)**
• **GASNIER, Pierre**
 **38000 GRENOBLE (FR)**
• **BRULAIS, Sébastien**
 **38000 GRENOBLE (FR)**
• **RAMAHEFA-ANDRY, Prince Arnaud**
 **38000 GRENOBLE (FR)**
• **GROS, Jean-Philippe**
 **38000 GRENOBLE (FR)**

(74) Mandataire: **Cabinet Laurent & Charras**
 **Le Contemporain**
 **50 Chemin de la Bruyère**
 **69574 Dardilly Cedex (FR)**

(56) Documents cités:
EP-A1- 0 841 969      WO-A2-2011/160040
US-A- 5 590 908       US-A1- 2005 192 129

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### Domaine Technique

L'invention se rattache au domaine des planches de glisse sur neige ou sur eau, et en particulier les skis alpins, de fond ou de randonnée, ou encore les snowboards ou les wakeboards.
L'invention concerne plus particulièrement un système d'analyse de l'utilisation d'une planche de glisse, c'est-à-dire un circuit électronique permettant d'obtenir au moins une information liée à l'utilisation de la planche de glisse. L'invention concerne également une planche de glisse instrumentée, équipée de ce système d'analyse.

### Techniques antérieures

Il est connu du brevet américain US 5 590 908 de mesurer les déformations d'une planche de glisse au moyen d'un capteur piézoélectrique afin d'obtenir une information sur les points de contact de la planche de glisse sur la neige. Il est également connu du brevet EP 0 841 969 d'utiliser des capteurs piézoélectriques pour amortir les vibrations d'une planche de glisse.
Ce type de capteur utilise le comportement intrinsèque d'un élément piézoélectrique qui convertit une énergie mécanique de déformation en énergie électrique.
Pour analyser les déformations d'une planche de glisse à l'aide d'un capteur piézoélectrique, il est nécessaire d'utiliser un circuit électronique d'analyse qui est alimenté en permanence. Ainsi, l'utilisation d'une source d'énergie électrique fournissant une tension constante, telle qu'une batterie électrochimique ou tout autre moyen connu, est nécessaire.
Cependant, une batterie électrochimique présente des contraintes d'encombrement et de poids, de résistance au froid et de stockage, qui ne sont généralement pas compatibles avec une planche de glisse. En effet, une planche de glisse sur neige peut être utilisée à des températures proches de -20°C. Dans cette plage de température de fonctionnement, les batteries électrochimiques classiques sont peu performantes, voire non utilisables. De plus, les batteries se déchargent rapidement au froid et les batteries doivent être souvent remplacées ou rechargées par l'utilisateur, ce qui est très contraignant. En outre, une planche de glisse sur neige est souvent utilisée de manière ponctuelle, par exemple quelques jours chaque hiver.
Une batterie électrochimique embarquée sur une planche de glisse sur neige présenterait donc des grandes périodes d'inactivité, au moins entre le printemps et l'automne, au cours desquelles la batterie électrochimique serait complètement déchargée. Par ailleurs, une planche de glisse est un élément mécanique subissant des contraintes importantes, telles que des torsions ou des chocs.
Les applications concrètes impliquant l'utilisation d'un circuit électronique et d'un élément piézoélectrique embarqués sur une planche de glisse sont donc limitées et la grande majorité des dispositifs de mesures existants dans d'autres domaines d'application ne sont pas transposables sur une planche de glisse en raison de ces contraintes spécifiques.
Le document WO 2011/160040 décrit une planche de *skateboard* avec des diodes électroluminescentes disposées sous la planche pour afficher des effets lumineux sur le sol. L'alimentation des diodes est normalement réalisée par une batterie mais un mode de réalisation propose d'utiliser un transducteur piézoélectrique pour alimenter ces diodes électroluminescentes. Outre ce dispositif d'affichage, ce document propose également d'incorporer un circuit électronique sur la planche de *skateboard* afin de réaliser des mesures au cours du temps. Ce circuit électronique est alimenté par une batterie et peut intégrer un capteur de mouvement tel que décrit précédemment, c'est-à-dire un capteur piézoélectrique utilisant une mesure de déformation issue d'un élément piézoélectrique.
Cependant, l'enseignement de ce document n'est pas adapté au domaine des planches de glisse correspondant à l'invention, c'est-à-dire les planches de glisse sur neige ou sur eau, et en particulier les skis alpins, de fond ou de randonnée, ou encore les snowboards ou les wakeboards. En effet, pour ces planches de glisse, la face inférieure des planches de glisse est destinée à venir au contact de la surface sur laquelle la planche évolue contrairement à un *skateboard.* Il n'est donc pas utile de disposer des éléments lumineux sous la planche de glisse de l'invention car ces éléments ne seraient pas visibles. En outre, ce document ne décrit qu'une méthode classique d'alimentation du circuit électronique réalisant les mesures, c'est-à-dire l'utilisation d'une batterie. Le document US2005192129 divulgue un système d'analyse d'une planche de glisse selon le préambule de la revendication 1.
Le problème technique que propose de résoudre de l'invention est donc de trouver comment obtenir une information liée à l'utilisation d'une planche de glisse, telles que la durée d'utilisation de la planche de glisse, le nombre de sollicitations de la planche de glisse, voire la puissance exercée par l'utilisateur sur la planche de glisse, tout en s'affranchissant d'une source supplémentaire d'alimentation, et en particulier d'une batterie électrochimique.

**Exposé de l'invention**

L'invention est définie par la revendication 1 et propose de répondre à ce problème technique en utilisant au moins un élément piézoélectrique solidarisé à une planche de glisse et en utilisant cet élément piézoélectrique pour alimenter un circuit électronique de traitement. Le circuit électronique de traitement comprend des éléments assurant la détermination de paramètres liés à l'utilisation de la planche de glisse, tels que la durée d'utilisation et/ou le nombre des sollicitations de la planche de glisse. Ledit au moins élément piézoélectrique et le circuit électronique de traitement associé forment ensemble un circuit électronique autonome.

A cet effet, selon un premier aspect, l'invention concerne un système d'analyse d'une utilisation d'une planche de glisse comportant :

- au moins un élément piézoélectrique destiné à être solidarisé à ladite planche de glisse et destiné à générer une énergie électrique lors des déformations de ladite planche de glisse ; et
- un circuit électronique de traitement configuré pour estimer au moins un paramètre d'utilisation de ladite planche de glisse et destiné à être relié à ladite planche de glisse.

L'invention se caractérise en ce que ledit circuit électronique de traitement est alimenté par ladite énergie électrique générée par ledit au moins un élément piézoélectrique.

L'invention permet ainsi d'obtenir des paramètres liés à l'utilisation de la planche de glisse en utilisant uniquement l'énergie produite par ledit au moins un élément piézoélectrique. Ce faisant, l'invention permet d'obtenir des paramètres liés à l'utilisation de la planche de glisse sans utiliser une source supplémentaire d'alimentation, c'est-à-dire sans utiliser une batterie électrochimique, rechargeable ou non rechargeable, ou toute autre source d'énergie connue, par exemple des panneaux solaires. Ainsi, l'invention permet d'obtenir un circuit électronique très résistant aux conditions climatiques et aux périodes d'inactivité.

L' estimation de l'au moins un paramètre d'utilisation de ladite planche de glisse réalisée par ledit circuit électronique de traitement est déterminée en fonction de ladite énergie électrique générée par ledit au moins un élément piézoélectrique.

Selon un mode de réalisation, ledit circuit électronique de traitement comporte au moins un élément de stockage capacitif destiné à stocker au moins une partie de ladite énergie électrique générée par ledit au moins un élément piézoélectrique.

Cet élément de stockage capacitif permet de stocker l'énergie produite par l'au moins un élément piézoélectrique et qui ne serait pas utilisée par le circuit électronique. En restituant cette énergie au fur et à mesure du temps pour alimenter le circuit électronique de traitement dans les phases pour lesquelles l'au moins un élément piézoélectrique ne produit pas une énergie suffisante pour alimenter le circuit électronique de traitement, l'élément de stockage capacitif réalise une intégration de l'ensemble des énergies produites par ledit au moins un élément piézoélectrique.

Selon un mode de réalisation, ledit circuit électronique de traitement est configuré pour estimer une durée d'utilisation de la planche de glisse et/ou pour estimer une image de l'énergie mécanique imposée à la planche de glisse.

Selon un mode de réalisation, ledit circuit électronique de traitement comporte un organe de gestion configuré pour incrémenter au moins un compte binaire lorsque la tension aux bornes dudit élément de stockage capacitif atteint une valeur seuil ou une valeur de référence maximale de sorte que ledit au moins un compte binaire représente la durée d'utilisation de la planche de glisse et/ou une image de l'énergie mécanique imposée à la planche de glisse. Ce compte binaire n'est pas une mesure directe des déformations de la surface de la planche de glisse, l'information obtenue par ce compte binaire est par exemple liée au temps de déformation de la planche de glisse, dans ce cas le compte binaire est dénommé compte temporel, ou liée à l'amplitude des déformations de la planche de glisse, dans ce cas le compte binaire est dénommé compte d'activation.

Ainsi, ce compte binaire peut être utilisé pour estimer la durée et/ou l'intensité des sollicitations, la durée réelle d'utilisation de la planche de glisse, voire l'usure de cette planche de glisse ou le niveau d'engagement d'un skieur sur l'un ou l'autre de ses skis.

Selon un mode de réalisation, le circuit électronique de traitement comprend une mémoire non volatile connectée audit organe de gestion, ledit organe de gestion étant configuré pour inscrire en mémoire ledit au moins un compte binaire. Ce mode de réalisation permet d'enregistrer le compte temporel et/ou le compte d'activation et de mémoriser ces comptes lorsque le circuit électronique n'est pas alimenté.

Selon une réalisation, ledit organe de gestion est configuré pour inscrire dans la mémoire non volatile le compte temporel lorsqu'une valeur de référence minimale interne à l'organe de gestion est atteinte.

Selon une réalisation, ledit organe de gestion est configuré pour inscrire dans la mémoire non volatile le compte d'activation lorsqu'une valeur de référence maximale interne à l'organe de gestion est atteinte. Cette valeur de référence maximale est fixée au-delà de la tension minimale de fonctionnement du circuit de traitement électronique.

Le compte d'activation permet d'obtenir une information liée à l'amplitude des déformations de la surface sur laquelle l'au moins un élément piézoélectrique est disposé.

En utilisant le compte temporel et le compte d'activation sur une même durée d'enregistrement, il est possible de déterminer une information liée à la puissance subie par la planche de glisse en divisant le compte d'activation par le compte temporel.

Ce faisant, il est possible d'utiliser cette information liée à la puissance subie par la planche de glisse pour estimer l'usure de la planche de glisse ou l'engagement de l'utilisateur sur la durée d'enregistrement.

Selon un mode de réalisation, ledit organe de gestion comporte une horloge interne, ledit organe de gestion étant configuré pour incrémenter un compte temporel à chaque période de ladite horloge interne dès lors que l'organe de gestion est sous tension. Ce compte temporel permet d'obtenir une information liée au temps de déformation de la surface sur laquelle l'au moins un élément piézoélectrique est disposé. En utilisant l'horloge interne de l'organe de gestion, la génération de ce compte temporel consomme très peu d'énergie.

Selon un mode de réalisation, ledit circuit électronique comporte :

- un oscillateur destiné à produire un signal périodique, et
- un compteur connecté audit oscillateur, configuré pour incrémenter ledit au moins un compte binaire représentant la durée d'utilisation de la planche de glisse, dit compte temporel, à chaque période du signal périodique produit par ledit oscillateur ;
- ledit compte temporel étant accessible à l'organe de gestion.

Ce mode de réalisation permet d'obtenir un compte temporel en utilisant des composants électroniques très simples et peu énergivores, à savoir : un oscillateur et un compteur.

Par exemple, l'oscillateur peut être un oscillateur à quartz et le compteur peut être réalisé en mettant en cascade une série de bascules T.

Selon un mode de réalisation, ledit circuit électronique de traitement comporte au moins un comparateur à hystérésis configuré pour comparer la tension aux bornes dudit élément de stockage capacitif à au moins deux valeurs seuils.

Le comparateur à hystérésis est configuré pour autoriser ou interdire une mise sous tension de l'organe de gestion respectivement en fonction d'une première et d'une deuxième valeur seuil.

Selon une réalisation, le circuit électronique de traitement comprend un deuxième comparateur à hystérésis configuré pour autoriser ou interdire une mise sous tension de l'oscillateur et du compteur respectivement en fonction d'une troisième et d'une quatrième valeur seuil.

Selon un mode de réalisation, ledit circuit électronique de traitement comporte une antenne radiofréquence configurée pour alimenter par couplage électromagnétique ladite mémoire non volatile de sorte qu'un lecteur externe puisse obtenir, sans fil, ledit au moins un compte binaire.

L'alimentation par couplage électromagnétique d'un circuit électronique autonome est préférentiellement réalisée par la technologie d'indentification radiofréquence, plus connue sous l'anagramme RFID, pour « *radio frequency identification* » dans la littérature anglo-saxonne.

Ce mode de réalisation permet ainsi de lire simplement la mémoire du circuit électronique pour obtenir les comptes binaires sans utiliser une connexion physique avec le circuit électronique.

Ce lecteur externe peut correspondre à un lecteur spécifique, un smartphone, ou encore un ordinateur.

Selon un mode de réalisation, ledit circuit électronique de traitement comprend un convertisseur de tension disposé en sortie de l'au moins un élément piézoélectrique, ledit convertisseur de tension étant destiné à fournir une tension redressée ou continue à partir de la tension générée par l'au moins un élément piézoélectrique.

Selon un second aspect, l'invention concerne un procédé d'analyse de l'utilisation d'une planche de glisse mis en oeuvre par le système tel que défini selon le premier aspect de l'invention.

Ce procédé se caractérise en ce qu'en fonction de la tension aux bornes dudit élément de stockage capacitif, ledit organe de gestion est configuré pour inscrire ledit compte temporel et/ou ledit compte d'activation dans la mémoire non volatile.

Selon un troisième aspect de l'invention, l'invention concerne une planche de glisse comportant un système d'analyse d'une utilisation de ladite planche de glisse selon le premier aspect de l'invention.

Ce troisième aspect de l'invention permet d'obtenir une planche de glisse instrumentée, c'est-à-dire intégrant un circuit électronique permettant d'obtenir une information liée à l'utilisation et/ou à la déformation de la planche de glisse.

Selon un mode de réalisation, ledit circuit électronique est monté sur ledit au moins un élément piézoélectrique. Ce mode de réalisation permet ainsi d'utiliser un boiter unique réduisant l'encombrement sur la planche de glisse. De préférence, le boîtier du circuit électronique présente une capacité de flexion sensiblement équivalente à celle de l'au moins un élément piézoélectrique de sorte à limiter l'impact de la présence du boitier sur les capacités de flexion de l'au moins un élément piézoélectrique. Typiquement, le boitier peut être réalisé dans un plastique dont la dureté est comprise entre 50 et 100 Shore A.

Selon un mode de réalisation, ladite planche de glisse comporte des éléments de fixation montés entre une extrémité avant et une extrémité arrière de ladite planche de glisse, ledit au moins un élément piézoélectrique étant disposé entre lesdits éléments de fixation et ladite extrémité avant de ladite planche de glisse.

Ce mode de réalisation permet de capter efficacement les déformations de la planche de glisse dans une région où les déformations sont d'amplitudes importantes.

De préférence, l'au moins un élément piézoélectrique est disposé juste devant la fixation car cette zone est moins exposée aux chocs, notamment les chocs dues au croisement de skis.

Selon un mode de réalisation, ladite planche de glisse comporte plusieurs couches structurelles :

- un ensemble inférieur comportant une semelle destinée à entrer au contact avec une surface de glisse et au moins une couche de renfort ;
- un ensemble supérieur comportant au moins une couche de renfort ; et
- un noyau interposé entre les ensembles supérieur et inférieur ;

ledit au moins un élément piézoélectrique étant disposé au contact d'au moins une couche de renfort.

Ce mode de réalisation permet de capter efficacement les déformations de l'élément structurel qui confère ses propriétés de rigidité à la planche de glisse. L'ensemble supérieur peut également comporter une couche de protection et de décoration qui est classiquement moins rigide que la couche de renfort.

Les déformations de la couche de renfort sont donc amorties par la couche de protection et de décoration.

Ainsi, le positionnement préférentiel de l'au moins un élément piézoélectrique sur la couche de renfort permet d'obtenir un enregistrement non amorti et plus pertinent des déformations de la planche de glisse.

Selon un mode de réalisation, ledit ensemble supérieur comportant une couche de protection et/ou de décoration, ladite planche de glisse comporte une ouverture de ladite couche de protection et de décoration dans laquelle est positionné ledit au moins un élément piézoélectrique.

Ce mode de réalisation permet d'accéder à la couche de renfort depuis la face supérieure de la planche de glisse de sorte à réaliser l'installation et/ou la maintenance de l'élément piézoélectrique.

Selon un mode de réalisation, ladite planche de glisse comporte une couche de protection et/ou de décoration, ledit au moins un élément piézoélectrique étant disposé au contact de cette couche de protection et/ou de décoration.

Selon un mode de réalisation, ledit circuit électronique est monté sur ladite planche de glisse dans un boitier de protection.

Ce mode de réalisation permet de protéger le circuit électronique des chocs et de l'humidité, par exemple de la pluie et de la neige.

Selon un mode de réalisation, ledit boitier de protection est monté de manière amovible sur ladite planche de glisse.

Ce mode de réalisation permet de faciliter les maintenances du circuit électronique. En outre, ce mode de réalisation permet de déplacer le circuit électronique pour analyser les déformations de plusieurs planches de glisses avec un même circuit électronique.

Selon un mode de réalisation, ladite planche de glisse comporte au moins un élément d'interface entre la surface supérieure de la planche de glisse et les éléments de fixation, ledit boitier de protection étant fixé audit au moins élément interface.

Ce mode de réalisation permet de fixer efficacement le boitier de protection avec la planche de glisse en déplaçant le boitier de protection de la fixation.

## Description sommaire des figures

La manière de réaliser l'invention, ainsi que les avantages qui en découlent, ressortiront bien de la description des modes de réalisation qui suivent, à l'appui des figures annexées dans lesquelles :

- la figure 1 est un schéma électrique d'un système d'analyse de l'utilisation d'une planche de glisse selon un premier mode de réalisation de l'invention ;
- la figure 2 est un schéma électrique d'un système d'analyse de l'utilisation d'une planche de glisse selon un second mode de réalisation de l'invention ;
- les figures 3a à 3e sont des représentations temporelles d'acquisition de différents paramètres, réalisées à l'aide du système de la figure 1, sur lesquelles la figure 3a représente les déformations de la planche de glisse **(D),** la figure 3b représente la tension aux bornes de l'élément de stockage capacitif, la figure 3c représente les données relatives au compte d'activation enregistrées dans la mémoire non volatile, et les figures 3d et 3e représentent les données relatives au compte temporel respectivement dans le microcontrôleur et dans la mémoire non volatile;
- les figures 4a à 4e sont des représentations temporelles d'acquisition de différents paramètres, réalisées à l'aide du système de la figure 2, sur lesquelles la figure 4a représente les déformations de la planche de glisse (D), la figure 4b représente la tension aux bornes de l'élément de stockage capacitif, la figure 4c représente les données relatives au compte d'activation enregistrées dans la mémoire non volatile, et les figures 4d et 4e représentent les données relatives au compte temporel respectivement dans une mémoire tampon et dans la mémoire non volatile;

- la figure 5 est une vue de dessus d'une planche de glisse conforme à l'invention ;
- la figure 6 est une vue de côté de la partie avant de la planche de glisse de la figure 5 ;
- la figure 7 est une vue en perspective éclatée des éléments avant rapportées sur la planche de glisse de la figure 5 ;
- les figures 8 à 11 sont des vues partielles de dessus de la planche de glisse de la figure 5 dans plusieurs positions de montage des différents éléments du système d'analyse;
- la figure 12 est une vue en coupe verticale de la planche de glisse de la figure 5 selon un premier mode de réalisation de l'invention ; et
- la figure 13 est une vue en coupe verticale de la planche de glisse de la figure 5 selon un second mode de réalisation de l'invention.

Bien entendu, les dimensions et les proportions de certains éléments constitutifs de l'invention ont pu être déformées, exagérées et s'écarter de la réalité, dans le but de bien faire comprendre l'invention.

## Manière de réaliser l'invention

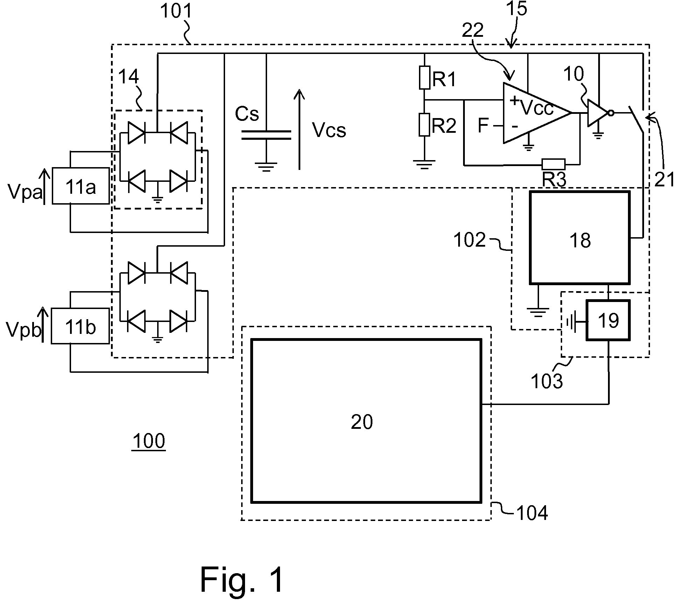

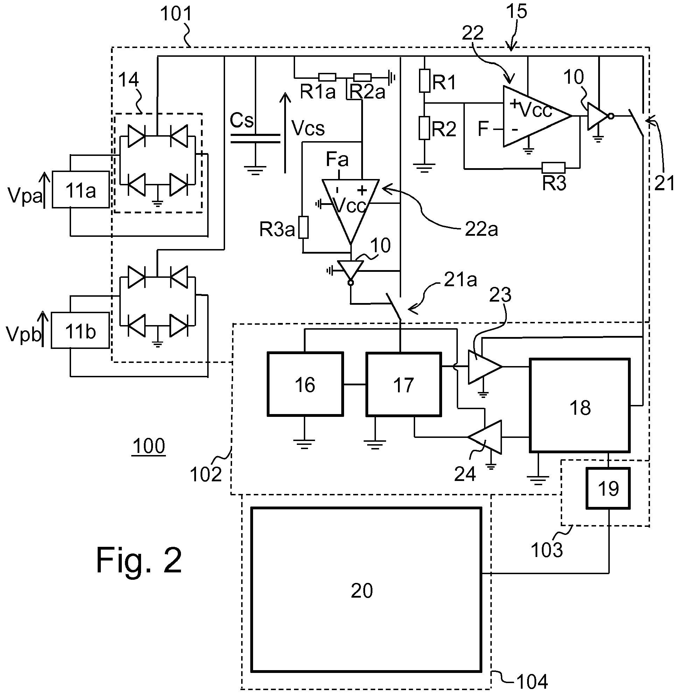

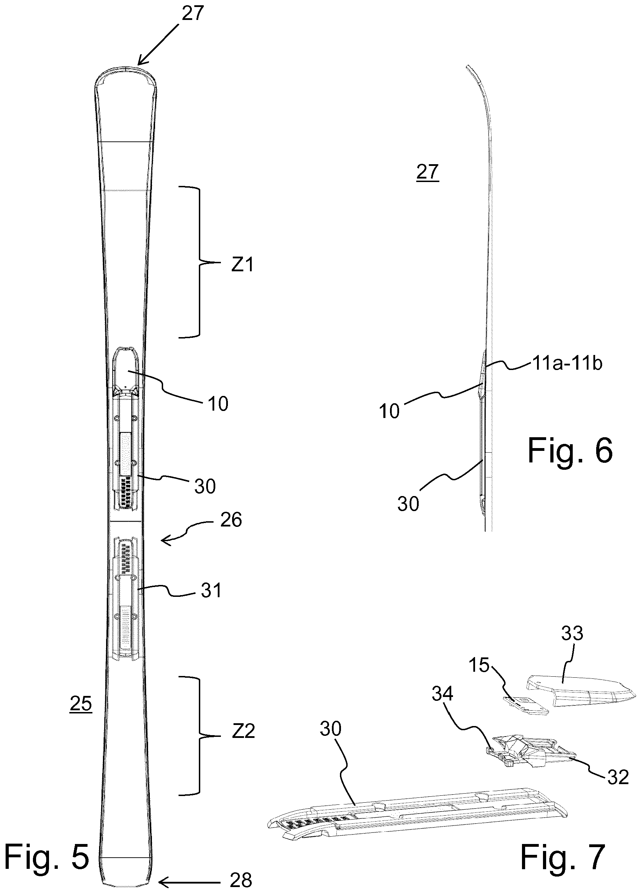

Les figures 1 et 2 représentent deux modes de réalisation d'un schéma électrique d'un système d'analyse **100** d'une utilisation d'une planche de glisse **25**. Ce système d'analyse **100** est destiné à être solidarisé à une planche de glisse **25** comme cela sera illustré par les figures 5 à 13.

Selon ces deux modes de réalisation, le système d'analyse **100** comprend, d'une part, au moins un élément destiné à produire de l'énergie électrique suite à une déformation, tel qu'un élément piézoélectrique **11a, 11b** et, d'autre part, un circuit électronique de traitement **15**.

Le circuit électronique de traitement **15** comprend une partie relative au stockage et à la gestion de l'énergie électrique **101,** ainsi qu'une partie **102** relative à la détermination d'au moins une information liée à l'utilisation de la planche de glisse **25,** cette partie **102** comportant des éléments assurant les estimations et les calculs liés à l'utilisation de la planche de glisse **25.**

Afin de mémoriser les informations liées à l'utilisation de la planche de glisse **25,** le circuit électronique de traitement **15** comprend, en outre, une partie **103** relative à la mémorisation des données. Et enfin, afin d'assurer la communication de ces données enregistrées vers un dispositif externe au système d'analyse **100,** le circuit électronique de traitement **15** comprend une partie **104** relative à la communication.

De manière commune aux deux modes de réalisation, le système **100** comporte au moins un élément piézoélectrique **11a, 11b,** ici au nombre de deux. Les éléments piézoélectriques **11a, 11b** ne sont pas directement reliés l'un à l'autre. Les éléments piézoélectriques **11a, 11b** peuvent être électriquement disposés en parallèle. Alternativement, les éléments piézoélectriques **11a, 11b** sont électriquement disposés en série l'un par rapport à l'autre.

Les deux éléments piézoélectriques **11a, 11b** sont destinés à générer un signal électrique durant l'utilisation de la planche de glisse **25**. Plus précisément, chaque élément piézoélectrique **11a, 11b** génère une tension électrique **Vpa, Vpb** en réponse à une déformation mécanique qu'il subit. En présence de plusieurs éléments piézoélectriques **11a, 11b** cette tension électrique **Vpa, Vpb** peut varier d'un élément piézoélectrique **11a, 11b** à l'autre.

Le circuit électronique de traitement **15** est uniquement alimenté par les éléments piézoélectriques **11a, 11b.** Ainsi le système d'analyse **100,** formant lui-même un circuit électronique composé des éléments piézoélectriques **11a, 11b** ainsi que du circuit électronique de traitement **15,** est autonome, c'est-à-dire qu'il ne nécessite pas une source d'alimentation extérieure au système d'analyse **100,** telle que par exemple une batterie rechargeable ou non. En d'autres termes, les éléments piézoélectriques **11a, 11b** assurent à la fois le rôle de source d'information pour la détermination de l'utilisation de la planche de glisse **25** et le rôle de source d'alimentation électrique, comme cela sera décrit plus loin.

La tension **Vpa, Vpb** générée par chaque élément piézoélectrique **11a-11b** est une tension alternative, non continue, qui présente une grande variabilité en amplitude et en fréquence.

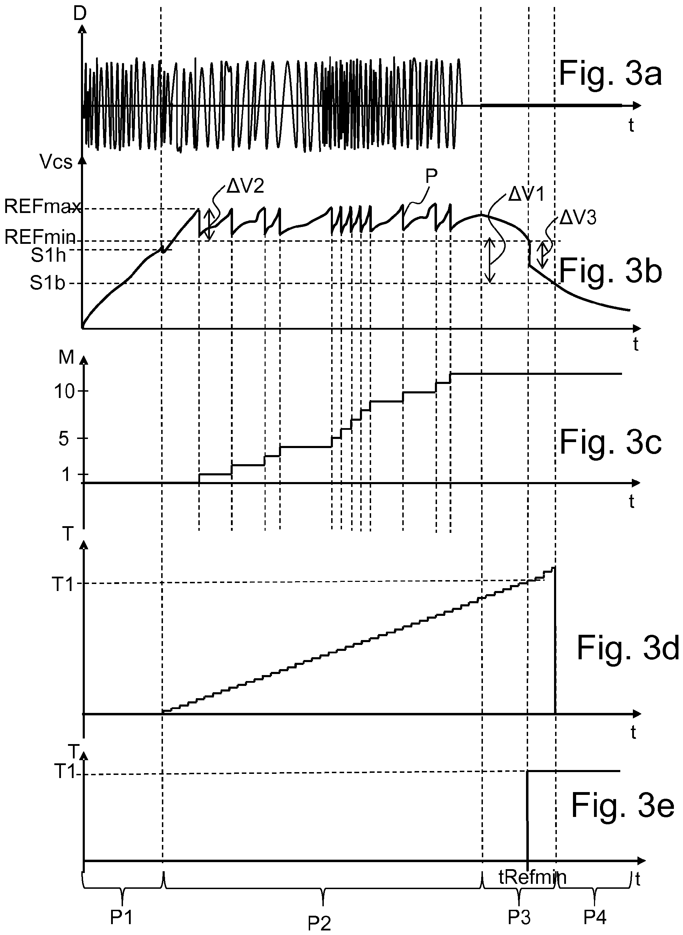

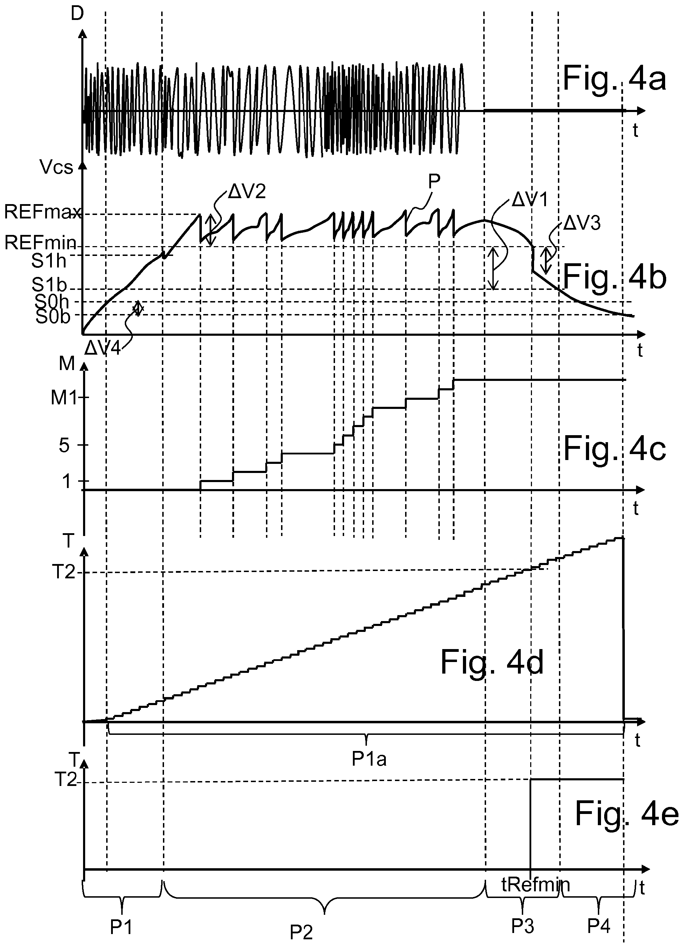

Tel que cela est illustré par les figures 3a et 4a, lors d'une phase **P1** dite de démarrage et lors d'une phase **P2** dite d'écriture, la planche de glisse **25** se déforme en flexion lorsqu'elle est utilisée et une surface **12** de la planche de glisse subit alors des déformations transmises aux éléments piézoélectriques **11a-11b** qui génèrent une tension **Vpa, Vpb** qui varie en fonction des déformations subies par la surface **12**. Lors d'une phase **P3,** dite d'arrêt, et d'une phase **P4,** dite d'extinction, la planche de glisse **25** est à l'arrêt et, de ce fait, elle n'est plus déformée, aussi la surface **12** ne subit pas de déformation et la tension **Vpa, Vpb** générée par les éléments piézoélectriques **11a-11b** devient nulle.

De manière commune aux deux modes de réalisation, la partie relative au stockage et à la gestion de l'énergie électrique **101** comporte au moins un convertisseur de tension **14,** au moins un élément de stockage capacitif **Cs** et au moins un comparateur de tension **22.**

La tension **Vpa, Vpb,** intrinsèquement variable, est injectée dans un convertisseur de tension **14** qui fournit une tension redressée ou continue à partir de la tension **Vpa, Vpb** générée par chaque élément piézoélectrique **11a-11b.** Selon les deux modes de réalisation, ce convertisseur de tension **14** est réalisé par un pont de diodes qui fournit une tension redressée.

Selon une variante de réalisation, le convertisseur de tension **14** est réalisé par un hacheur de type « buck », de type « boost » ou de type « buck-boost », ces hacheurs présentent l'avantage de fournir une tension continue. Il est à noter que chaque élément piézoélectrique **11a-11b** est connecté sans élément intermédiaire au convertisseur de tension **14.** Dans le cas où les éléments piézoélectriques **11a, 11b** sont électriquement disposés en série ou en parallèle, il est avantageusement prévu un unique convertisseur de tension **14,** ce qui peut représenter une économie de fabrication non négligeable.

En sortie de ce convertisseur de tension **14,** la tension **Vpa, Vpb** générée par les éléments piézoélectriques **11a-11b** est stockée dans un élément de stockage capacitif **Cs,** de type super capacité ou condensateur. L'élément de stockage capacitif **Cs** peut comporter plusieurs super capacités ou condensateurs sans changer l'invention. Dans le cas où plusieurs condensateurs sont utilisés, ils sont alors électriquement disposés en parallèle les uns par rapport aux autres, la somme des capacités de chacun des condensateurs permettant d'obtenir la capacité équivalente de l'ensemble des condensateurs.

Les figures 3b et 4b illustrent la tension **Vcs** aux bornes de l'élément de stockage capacitif **Cs.** A l'état initial, c'est-à-dire lorsque la planche de glisse **25** n'est pas utilisée, l'élément de stockage capacitif **Cs** est complètement déchargé. Dans les phases de démarrage **P1** et d'écriture **P2,** la planche de glisse **25** est utilisée et se déforme en flexion, notamment sur la neige. Dans les phases de démarrage **P1** et d'écriture **P2,** les déformations de la planche de glisse **25,** et donc de la surface **12,** permettent de charger l'élément de stockage capacitif **Cs** par l'intermédiaire des éléments piézoélectriques **11a, 11b.**

Durant les phases d'arrêt **P3** et d'extinction **P4,** la planche de glisse **25** n'étant plus sollicitée, l'élément de stockage capacitif **Cs** se décharge.

La partie **101** relative au stockage et à la gestion de l'énergie électrique comporte, en outre, au moins un comparateur de tension **22, 22a** configuré pour contrôler l'alimentation de la partie **102** relative à la détermination d'au moins une information liée à l'utilisation de la planche de glisse **25.** Pour cela, le comparateur de tension **22, 22a** est configuré pour comparer la tension **Vcs** en sortie de l'élément de stockage capacitif **Cs** à deux valeurs de tension seuils **S1h, S1b, S0h, S0b,** comme cela sera décrit plus loin en relation avec la figure 3b et 4b.

De manière commune aux deux modes de réalisation, le comparateur de tension **22** est relié d'une part à l'élément de stockage capacitif **Cs** par une borne d'alimentation **Vcc,** à un interrupteur **21** en sortie, à une ou plusieurs résistances **R1, R2, R3** sur sa borne positive et à une référence de tension **F** sur sa borne négative. Avantageusement, en sortie du comparateur de tension **22,** un inverseur de signal **10** est disposé. Il est à noter que l'interrupteur **21** est, par exemple, un transistor de type PMOS. Bien entendu, cet interrupteur **21** peut également être un transistor de type NMOS et, dans ce cas, l'architecture du circuit électronique de traitement **15** devra être adaptée.

Par ailleurs, la partie **103** relative à la mémorisation des données comprend au moins une mémoire non volatile **19,** tel que cela sera décrit plus loin. Il est à noter qu'une mémoire est dite non volatile, dès lors que sa mise hors tension ne provoque pas la perte des données enregistrées.

Quant à la partie **104** relative à la communication, celle-ci comprend une antenne **20,** qui sera également décrite plus loin dans la description.

Selon le premier mode de réalisation illustré par la figure 1, le circuit électronique de traitement **15,** et notamment sa partie **102** relative à la détermination d'au moins une information liée à l'utilisation de la planche de glisse **25,** comprend un microcontrôleur **18.**

Le microcontrôleur **18** réalise au moins un compte binaire **T, M** et est configuré pour comparer sa tension d'alimentation par rapport à au moins une valeur de tension de référence **REFmax, REFmin.** Selon ce mode de réalisation, le microcontrôleur **18** réalise deux comptes binaires, un compte binaire temporel **T** correspondant à une durée d'utilisation de la planche de glisse **25** et un compte binaire **M,** appelé compte d'activation, qui vise à représenter une information liée à l'amplitude des déformations de la planche de glisse **25.**

Autrement dit, selon ce mode de réalisation, le microcontrôleur **18** estime à la fois une durée d'utilisation et une amplitude des déformations de la planche de glisse **25.**

Il est à noter que, selon ce mode de réalisation, un unique comparateur de tension **22** est prévu. Ce comparateur de tension **22** réalise la fonction comparateur à hystérésis permettant la fermeture ou l'ouverture de l'interrupteur 21 afin de connecter, respectivement de déconnecter, le microcontrôleur **18** à l'élément de stockage capacitif **Cs.** Pour cela, il est défini deux seuils **S1h** et **S1b,** respectivement appelés dans la suite de la description seuil d'alimentation **S1h** et seuil de coupure **S1b.** Autrement dit, ce comparateur de tension **22** est configuré pour contrôler l'alimentation du microcontrôleur **18** en fonction du seuil d'alimentation **S1h** et du seuil de coupure **S1b.**

Lorsque la tension **Vcs** aux bornes de l'élément de stockage capacitif **Cs** atteint le seuil d'alimentation **S1h,** la sortie du comparateur de tension **22** passe à l'état haut. Ce signal inversé permet la commande de l'interrupteur **21,** qui en se fermant, connecte l'élément de stockage capacitif **Cs** au microcontrôleur **18**.

Sur la figure 3b, après avoir atteint le seuil d'alimentation **S1h,** la tension **Vcs** diminue légèrement en réponse à la mise sous tension du microcontrôleur **18**.

A la fin des sollicitations de la planche de glisse **25** (phases **P3, P4**), l'élément de stockage capacitif **Cs** n'étant plus alimenté par les éléments piézoélectriques **11a, 11b**, apparait une décharge de l'élément de stockage capacitif **Cs**. Du fait de la contreréaction positive des résistances **R1, R2, R3** sur le comparateur de tension **22,** le seuil de coupure **S1b** est fixé à une valeur de tension égale à $S1b = S1h - \Delta V1$, où $\Delta V1$ représente l'hystérésis généré par la mise en parallèle des résistances **R1** et **R3**.

Ainsi, lorsque la tension **Vcs** aux bornes de l'élément de stockage capacitif **Cs** passe en dessous du seuil de coupure **S1b,** la sortie du comparateur de tension **22** repasse à l'état bas, permettant l'ouverture de l'interrupteur **21** et déconnectant l'élément de stockage capacitif **Cs** au microcontrôleur **18**.

Dans la suite, le procédé de fonctionnement de la partie **102** relative à la détermination d'au moins une information liée à l'utilisation de la planche de glisse **25** sera décrit selon le premier mode de réalisation des figures 3a, 3b, 3c, 3d et 3e.

Une fois le microcontrôleur **18** sous-tension et que les éléments piézoélectriques **11a, 11b** continuent d'alimenter en énergie électrique l'élément de stockage capacitif **Cs** (phase **P2**), la tension **Vcs** atteint alors une valeur de référence maximale **REFmax**. Lorsque la tension **Vcs** atteint la valeur de référence maximale **REFmax,** le microcontrôleur **18** est configuré pour incrémenter le compte d'activation **M** et l'inscrire dans la mémoire non volatile **19**, comme le représente la figure 3c. Cette incrémentation ainsi que cette inscription en mémoire du compte d'activation **M** consomme une énergie représentée par une chute de tension $\Delta V2$ sur la figure 3b.

Selon ce procédé de fonctionnement, le compte d'activation **M,** représentant l'énergie mécanique imposée à la planche de glisse **25,** est incrémenté de la valeur 1 à chaque fois que la valeur de référence maximale **REFmax** est atteinte par la tension **Vcs,** comme cela est illustré par la figure 3c. Autrement dit, le compte d'activation **M** comptabilise le nombre de pics **P** où la tension **Vcs** a atteint la valeur de référence maximale **REFmax** au cours de la durée d'utilisation de la planche de glisse **25**.

Plus ces pics **P** sont serrés, plus la sollicitation de la planche de glisse **25** par l'utilisateur est importante, et plus les pics **P** sont espacés, plus la sollicitation de la planche de glisse **25** par l'utilisateur est faible.

Selon ce mode de réalisation, le compte temporel **T** est déterminé par une horloge interne au microcontrôleur **18** qui s'active dès la mise sous tension du microcontrôleur **18,** comme le montre la figure 3d. Autrement dit, le compte temporel **T** démarre dès que la tension **Vcs** atteint le seuil d'alimentation **S1h**.

Lorsque les flexions de la planche de glisse **25** s'interrompent, les éléments piézoélectriques **11a, 11b** cessent d'alimenter en énergie électrique l'élément de stockage capacitif **Cs,** dont la tension **Vcs** diminue progressivement en passant par une valeur de référence minimale **REFmin**. Selon ce procédé de fonctionnement, dès que la tension **Vcs** atteint cette valeur de référence minimale **REFmin,** le microcontrôleur **18** est configuré pour inscrire le compte temporel **T** dans la mémoire non volatile **19**. Il est à noter que l'inscription de ce compte temporel **T** induit une chute de tension $\Delta V3$ .

Dans ce premier mode de réalisation, les seuils sont définis de sorte que :

$$S1b < S1h < REFmin < REFmax.$$

Durant les phases **P2** et **P3,** le circuit électronique de traitement **15** réalise au moins un compte binaire **T, M** en utilisant la tension **Vcs** aux bornes de l'élément de stockage capacitif **Cs**.

Dans les phases **P3** et **P4,** lorsque l'activité de la planche de glisse **25** est arrêtée, le comptage du nombre d'activation **M** est arrêté automatiquement étant donné que la valeur de référence maximale **REFmax** n'est plus atteinte, tandis que le comptage de la durée d'utilisation **T** par le microcontrôleur **18** est arrêté à la fin de la phase **P3**, et au début de la phase **P4** lorsque que la tension **Vcs** est inférieure ou égale au seuil de coupure **S1b** (figure3d). Toutefois, selon ce procédé de fonctionnement le comptage de la durée d'utilisation **T** par le microcontrôleur **18** après le temps **tRefmin** n'est pas enregistré dans la mémoire non volatile 19 (cf. fig. 3e).

Lorsque la tension **Vcs** aux bornes de l'élément de stockage capacitif **Cs** atteint le seuil de coupure **S1b,** le microcontrôleur **18** est mis hors tension et les données relatives aux comptes binaires **T** et **M** restent dans la mémoire non volatile **19,** comme cela est illustré par les figures 3c et 3e.

Dans la suite, les éléments propres au deuxième mode de réalisation illustré par la figure 2 sont détaillés. Selon ce deuxième mode de réalisation, le microcontrôleur **18** réalise un unique compte binaire, le compte d'activation **M**. Autrement dit, selon ce mode de réalisation, le microcontrôleur **18** estime l'amplitude des déformations de la planche de glisse **25**. En effet, le compte temporel **T** est obtenu par un oscillateur **16,** un compteur **17** qui sont ici des éléments distincts du microcontrôleur **18**.

L'oscillateur **16** permet de délivrer un signal périodique au compteur **17**. A chaque période du signal périodique de l'oscillateur **16,** le compteur **17** incrémente le compte temporel **T**. Par exemple, l'oscillateur **16** peut être un oscillateur à quartz et le compteur **17** peut être réalisé en mettant en cascade une série de bascules T.

Dans ce deuxième mode de réalisation, l'oscillateur **16** et le compteur **17** sont alimentés par l'élément de stockage capacitif **Cs** à l'aide d'un deuxième comparateur de tension **22a.**

Ce deuxième comparateur de tension **22a,** muni d'une référence externe **Fa** et entouré des résistances **R1a, R2a, R3a,** réalise la fonction comparateur à hystérésis permettant la fermeture, respectivement l'ouverture, de l'interrupteur **21a** afin de connecter, respectivement de déconnecter, l'oscillateur **16** et le compteur **17** à l'élément de stockage capacitif **Cs.**

Pour cela, il est défini deux seuils **S0h** et **S0b,** respectivement appelé dans la suite de la description seuil de comptage **S0h** et seuil de désactivation **S0b.** Autrement dit, le système d'analyse **100,** selon ce deuxième mode de réalisation, comprend deux comparateurs de tension **22, 22a,** avec un premier comparateur de tension **22** configuré pour contrôler l'alimentation du microcontrôleur **18** en fonction du seuil d'alimentation **S1h** et du seuil de coupure **S1b** et un deuxième comparateur de tension **22a** configuré pour contrôler l'alimentation de l'oscillateur **16** et du compteur **17** en fonction du seuil de comptage **S0h** et du seuil de désactivation **S0b.**

Dans ce second mode de réalisation, les seuils sont définis de sorte que :

$$S0b < S0h < S1b < S1h.$$

Lorsque la tension **Vcs** aux bornes de l'élément de stockage capacitif **Cs** atteint le seuil de comptage **S0h,** la sortie du deuxième comparateur de tension **22a** passe à l'état haut, permettant la commande de l'interrupteur **21a,** qui en se fermant, connecte l'élément de stockage capacitif **Cs** à l'oscillateur **16** et au compteur **17.** Sur la figure 4b, après avoir atteint le seuil de comptage **S0h,** la tension **Vcs** diminue légèrement en réponse à la mise sous tension de l'oscillateur **16** et du compteur **17.** A compter du seuil de comptage **S0h,** une phase de comptage **P1a** débute jusqu'à la mise hors tension de l'oscillateur **16** et du compteur **17.**

Les sollicitations se poursuivant, la tension **Vcs** aux bornes de l'élément de stockage capacitif **Cs** atteint le seuil d'alimentation **S1h,** qui permet une alimentation du microcontrôleur **18** via le premier comparateur de tension **22,** comme cela a été décrit précédemment.

A la fin des sollicitations de la planche de glisse **25,** l'élément de stockage capacitif **Cs** n'étant plus alimenté par les éléments piézoélectriques **11a, 11b,** apparait alors une décharge de l'élément de stockage capacitif **Cs.**

Ainsi, lorsque la tension **Vcs** aux bornes de l'élément de stockage capacitif **Cs** passe en dessous du seuil de coupure **S1b,** la sortie du premier comparateur de tension **22** repasse à l'état bas, permettant l'ouverture de l'interrupteur **21** et déconnectant l'élément de stockage capacitif **Cs** au microcontrôleur **18.** Par ailleurs, bien que le microcontrôleur **18** ait été déconnecté, la décharge de l'élément de stockage capacitif **Cs** se poursuit.

Du fait de la contreréaction positive des résistances **R1a-R3a** sur le deuxième comparateur de tension **22a,** le seuil de désactivation **S0b** est fixée à une valeur de tension égale à **S0b = S0h - ∆V4,** où **∆V4** représente l'hystérésis généré par la mise en parallèle des résistances **R1a** et **R3a.** Ainsi, lorsque la tension **Vcs** aux bornes de l'élément de stockage capacitif **Cs** passe en dessous du seuil de désactivation **S0b,** la sortie du deuxième comparateur de tension **22a** repasse à l'état bas, permettant l'ouverture de l'interrupteur **21a** et déconnectant l'élément de stockage capacitif **Cs** de l'oscillateur **16** et du compteur **17.**

Le procédé de fonctionnement de la partie **102** relative à la détermination d'au moins une information liée à l'utilisation de la planche de glisse **25** est ensuite décrit selon le deuxième mode de réalisation à l'aide des figures 4a, 4b, 4c, 4d et 4e.

Une fois l'oscillateur **16** et le compteur **17** sous-tension et que les éléments piézoélectriques **11a, 11b** continuent d'alimenter en énergie électrique l'élément de stockage capacitif **Cs,** le compte temporel **T** est incrémenté puis stocké dans une mémoire tampon, c'est-à-dire une mémoire temporaire qui lorsqu'elle est mise hors tension s'efface. La mémoire tampon évolue à la fréquence du compteur **17.** De la même manière que précédemment, une fois le microcontrôleur **18** sous-tension (phase **P2**), le microcontrôleur **18** est configuré pour incrémenter le compte d'activation **M** et l'inscrire dans la mémoire non volatile **19** dès que la tension **Vcs** atteint la valeur de référence maximale **REFmax,** comme le représente la figure 4c.

Cette incrémentation, ainsi que cette inscription en mémoire du compte d'activation **M,** consomme une énergie représentée par une chute de tension ∆**V2** sur la figure 4b.

Lorsque les flexions de la planche de glisse **25** s'interrompent, les éléments piézoélectriques **11a, 11b** cessent d'alimenter en énergie électrique l'élément de stockage capacitif **Cs,** dont la tension **Vcs** diminue progressivement en passant par une valeur de référence minimale **REFmin.** Dès que la tension **Vcs** atteint cette valeur de référence minimale **REFmin,** le microcontrôleur **18** est configuré pour lire le compte temporel **T** inscrit dans la mémoire tampon et l'inscrire dans la mémoire non volatile **19.** Il est à noter que l'inscription de ce compte temporel **T** induit une chute de tension ∆**V3.** De plus, afin d'adapter les niveaux de tension entre le compteur **17** et le microcontrôleur **18,** le circuit de traitement électronique **15** comprend des buffers.

Dans ce deuxième mode de réalisation, les seuils sont définis de sorte que :

$$S0b < S0h < S1b < S1h < REFmin < REFmax.$$

Durant les phases P1a, **P2** et **P3,** le circuit électronique de traitement **15** réalise au moins un compte binaire **T, M** en utilisant la tension **Vcs** aux bornes de l'élément de stockage capacitif **Cs**. Dans les phases **P3** et **P4,** lorsque l'activité de la planche de glisse est arrêtée, le comptage des sollicitations **M** est arrêté automatiquement étant donné que la valeur de référence maximale **REFmax** n'est plus atteinte, tandis que le comptage de la durée d'utilisation **T** par l'oscillateur **16** et le compteur **17** continue. Lorsque la tension **Vcs** aux bornes de l'élément de stockage capacitif **Cs** atteint le seuil de coupure **S1b,** le microcontrôleur **18** est mis hors tension et les données relatives aux comptes binaires **T,** telles que la durée d'utilisation **T2** et le nombre d'activation **M1,** restent dans la mémoire non volatile **19,** comme cela est illustré par les figures 4c et 4e.

Il est à noter que la durée d'utilisation **T2** est supérieure à la durée d'utilisation **T1** calculée avec le premier mode de réalisation, car le comptage par le compteur **17** a été mis en oeuvre plus tôt.

Le comptage de la durée d'utilisation **T** est arrêté à la fin de la phase **P1a,** lorsque que la tension **Vcs** est inférieure ou égale au seuil de désactivation **S0b.** Toutefois, la mise hors tension de l'oscillateur **16** et du compteur **17** a pour conséquence de remettre à zéro la mémoire tampon, comme le montre la figure 4d. De plus, comme illustré par la figure 4e, la mise en mémoire du compte temporel **T** dans la mémoire non volatile **19** est réalisée au temps **tREFmin,** par conséquent la durée comptabilisée après **tREFmin** est perdue.

Que ce soit pour le premier mode de réalisation illustré par la figure 1 ou pour le deuxième mode de réalisation illustré par la figure 2, des variantes de réalisation du procédé de fonctionnement ont été identifiées.

Selon une première variante du procédé de fonctionnement, il est possible de prévoir que, dès que la tension **Vcs** aux bornes de l'élément de stockage capacitif **Cs** atteint la valeur de référence maximale **REFmax,** le microcontrôleur **18** est configuré pour inscrire dans la mémoire non volatile **19** à la fois le compte d'activation **M** et le compte temporel **T**. Une telle variante permet de s'affranchir de la valeur de référence minimale **REFmin.** Selon une variante particulière, la valeur de référence maximale **REFmax** est égale à **S1h,** ce qui permet de s'affranchir des références.

Selon une deuxième variante du procédé de fonctionnement, il est possible de prévoir que, dès que la tension **Vcs** aux bornes de l'élément de stockage capacitif **Cs** atteint la valeur de référence maximale **REFmax,** le microcontrôleur **18** est configuré pour inscrire dans la mémoire non volatile **19,** en alternance le compte d'activation **M** puis le compte temporel **T.** L'alternance est de préférence régulière, telle qu'une fois sur N, où N est par exemple égal à deux.

Dans ce cas, le compte d'activation **M** est incrémenté de la valeur N à chaque fois que la valeur de référence maximale **REFmax** est atteinte par la tension **Vcs.**

Selon une troisième variante de procédé de fonctionnement, dans laquelle la mémoire non volatile **19** comprend plusieurs cases de stockage de données, il est possible de prévoir que, dès que le microcontrôleur **18** est alimenté, c'est-à-dire dès que la tension **Vcs** aux bornes de l'élément de stockage capacitif **Cs** atteint le seuil d'alimentation **S1h,** il inscrit dans une première case de la mémoire non volatile **19** le compte temporel **T.** Lorsque la tension **Vcs** aux bornes de l'élément de stockage capacitif **Cs** atteint de nouveau le seuil d'alimentation **S1h,** le microcontrôleur **18** inscrit le nouveau compte temporel **T** dans une deuxième case de la mémoire non volatile **19** et ainsi de suite, de manière à former une mémoire empilée. La somme des cases empilées ou la dernière case empilée, suivant que l'horloge interne **18** ou le compteur **17** est remis à zéro ou non à chaque inscription, correspond à une estimation de la durée d'utilisation de la planche de glisse **25.** Selon cette troisième variante de procédé de fonctionnement, le compte d'activation **M** est égal au nombre de cases empilées. Par case empilée, il est entendu une case dans laquelle une donnée a été enregistrée. La valeur **M1** du compte d'activation **M** est alors déterminée en fin d'inscription, par exemple lors de la lecture des données enregistrées dans la mémoire non volatile **19.**

Dans tous les cas, excepté le cas de la troisième variante de procédé de fonctionnement précédemment décrite, lors de l'écriture dans la mémoire non volatile **19,** le microcontrôleur **18** est configuré pour réaliser :

- une lecture du compte temporel **T** et du compte d'activation **M** qui ont été précédemment enregistrés dans la mémoire non volatile **19,** par exemple lors d'enregistrements précédents correspondant aux utilisations précédentes de la planche de glisse;
- une mise à jour du compte temporel **T** et du compte d'activation **M** par incrémentation des valeurs **T** et **M** précédemment enregistrées par les valeurs **T** et **M** qui viennent d'être calculées ; et
- un enregistrement du nouveau compte temporel **T** et du nouveau compte d'activation **M** dans la mémoire non volatile **19.**

Pour le cas de la troisième variante de procédé de fonctionnement, lors de l'écriture dans la mémoire non volatile **19,** le microcontrôleur **18** est configuré pour :

- identifier une case vide adjacente à une case remplie ou la première case vide pour le cas d'une première écriture en mémoire, et
- enregistrer la valeur du compte temporel **T** dans la case identifiée lors de l'étape précédente.

Ainsi, quelle que soit la variante de procédé de fonctionnement choisie, la mémoire non volatile **19** contient la valeur **T,** correspondant au temps d'utilisation de la planche de glisse depuis sa première utilisation sur la neige ainsi que la valeur **M,** correspondant au niveau de sollicitations de la planche de glisse depuis sa première utilisation sur la neige

On comprend que le compte temporel **T** contient une information liée au temps de déformation de la surface **12** de la planche de glisse et donc une information liée au temps d'utilisation de la planche de glisse. En faisant l'approximation que la phase de démarrage **P1** de l'élément de stockage capacitif est très faible comparativement aux phases durant lesquelles le microcontrôleur **18** est actif, c'est-à-dire les phases **P2** et **P3,** il est possible d'assimiler le compte temporel **T** à la durée d'utilisation de la planche de glisse **25.**

De plus, le comptage de ce compte temporel **T** utilise des opérations ou des composants peu consommateurs en énergie, par exemple d'une puissance de moins de 5μWatts.

Le système d'analyse **100** pourrait uniquement fournir ce premier paramètre correspondant au compte temporel **T.** Par contre, l'invention peut également donner accès à d'autres valeurs que **T** en fonction des composants électroniques choisis pour former le circuit électronique de traitement **15.**

Aussi, en particulier, l'invention propose de fournir un deuxième paramètre qui est le compte d'activation **M.** Ce compte d'activation **M,** vise à représenter une information liée à l'amplitude des déformations de la surface **12.** Autrement dit, cette information représente l'intensité de l'activité de la planche de glisse, ou la façon dont est réellement sollicitée la planche de glisse.

Plus précisément, les opérations de lecture du nombre précédent et d'écriture du nouveau nombre en mémoire par le microcontrôleur consomment une puissance électrique importante.

Le compte d'activation **M** représente donc le nombre de fois que le microcontrôleur **18** a consommé cette quantité d'énergie, il est donc lié à la quantité d'énergie consommée par le microcontrôleur **18** dans son mode actif. En faisant l'approximation que la réalisation du compte temporel **T** et que les phases de démarrage et d'arrêt du microcontrôleur **18** présentent des consommations négligeables par rapport à la quantité d'énergie consommée lors de l'incrémentation de ce compte d'activation **M,** il est possible de lier le compte d'activation **M** à la quantité d'énergie stockée dans l'élément de stockage capacitif **Cs,** et à la quantité d'énergie générée par la déformation de la surface **12.** Ainsi, plus le compte **M** est élevé, plus la planche de glisse **25** a été fortement sollicitée.

En faisant le rapport entre le compte d'activation **M** et la durée d'utilisation **T,** il est possible d'estimer la puissance appliquée par l'usager.

Cette puissance peut être soit calculée grâce à des éléments électroniques appropriés ajoutés au circuit électronique de traitement **15,** non illustrés, puis être stockée dans la mémoire non volatile **19,** soit être calculée après transmission des valeurs des comptes temporel **T** et d'activation **M** à un lecteur externe, non illustré.

Des résultats de mesures effectuées sur des skis alpins ont donné des valeurs du compte d'activation **M** très différentes suivant le niveau du skieur. En effet, par exemple, un utilisateur adulte d'un bon niveau de ski réalise 100 écritures mémoires (c'est-à-dire incrémentation du compte M de 100) en 10s, tandis qu'un jeune enfant débutant, évoluant en chasse neige réalise seulement 2 écritures mémoires (c'est-à-dire incrémentation du compte M de 2) en 10s. Le compte d'activation **M** est donc un bon indicateur de l'activité du ski, et donc du niveau du skieur. Plus la valeur **M** est grande après une durée d'utilisation définie, plus le niveau d'activité du skieur et donc plus son niveau de ski est élevé, la planche de glisse ayant alors été sollicitée de façon importante.

Enfin, en faisant l'approximation que la puissance électrique du circuit électronique de traitement **15** est consommée principalement par le microcontrôleur **18** lors de l'écriture des comptes **T, M** en mémoire, il est possible d'estimer un état d'usure de la planche de glisse, ou un niveau d'engagement d'un skieur en connaissant le compte d'activation **M** et l'énergie consommée par le microcontrôleur **18** à chaque incrémentation du compte d'activation **M.** Il est ainsi possible de connaitre l'usage réel du ski, et ainsi de savoir si le skieur sollicite peu ou beaucoup son ski ce qui peut permettre d'informer un skieur sur la différence d'énergie imposée à un ski par rapport à un autre, dans le cas où les deux skis de la paire de skis sont équipés du système d'analyse **100.** Par exemple, il est possible de savoir si un skieur sollicite trop fortement une jambe par rapport à l'autre. De plus, il devient également possible de faire payer la planche de glisse pour son utilisation effective.

Par exemple, un loueur de ski pourrait facturer uniquement la durée d'utilisation de la planche de glisse **25,** c'est-à-dire uniquement lorsque l'usager skie. Ainsi, il est possible de louer une planche de glisse **25** en fonction du temps effectif d'utilisation de la planche de glisse **25.**

Après l'enregistrement des valeurs du compte temporel **T** et du compte d'activation **M** dans la mémoire non volatile **19,** le microcontrôleur **18** ou le compteur **17** est remis à zéro, du fait de leur mise hors tension. Toutefois, il est envisageable, dans le cas du deuxième mode de réalisation illustré par la figure 2, de prévoir que le microcontrôleur **18** est configuré pour remettre à zéro le compteur **17** avant que le seuil de coupure **S1b** ne soit atteint ou après une écriture en mémoire du compte temporel **T.** La remise à zéro du microcontrôleur **18** ou du compteur **17** permet d'éviter un dépassement de la valeur maximale que peut contenir le compteur **17,** ce dépassement ayant pour conséquence sa remise à zéro automatique, ce qui impliquerait une erreur dans le calcul du compte temporel **T.**

En outre, les valeurs des comptes **T** et **M** peuvent être extraites du circuit électronique de traitement **15** pour obtenir l'information liée au temps de déformation de la planche de glisse et donc à la durée d'utilisation de la planche de glisse issue du compte **T** et/ou une information liée à l'amplitude des déformations de la planche de glisse issue du compte **M.** Il est également possible de calculer la puissance mécanique générée par l'utilisateur et en particulier par le skieur. En effet, comme cela a été décrit précédemment, le calcul de la grandeur **M/T** reflète la puissance mécanique générée par l'utilisateur qui peut être corrélée au niveau du skieur. Les valeurs **M** et **M/T** permettent, en outre, de donner des informations sur l'usure réelle de la planche de glisse ainsi que sur l'activité réelle de l'utilisateur en lien avec sa performance et son niveau.

Afin d'assurer la communication et l'extraction des valeurs stockées dans la mémoire non volatile **19,** le circuit électronique de traitement **15** comprend une partie **104** relative à la communication.

Cette partie **104** peut éventuellement comprendre un connecteur filaire assurant la transmission des données mais, préférentiellement, le circuit électronique de traitement **15** comporte une antenne radiofréquence **20** configurée pour alimenter par couplage électromagnétique la mémoire non volatile **19.** Ainsi, un lecteur externe peut obtenir, sans fil, les comptes **T** et **M.** Ce système de transmission « RFID » comporte un tag passif qui utilise l'onde issue de l'interrogateur/lecteur pour alimenter la mémoire non volatile **19** et ainsi transmettre les comptes **T** et **M** à l'interrogateur/lecteur.

De préférence, le lecteur externe peut également commander le microcontrôleur **18** pour remettre à zéro la valeur des comptes **T** et **M** dans la mémoire non volatile **19.**

Le lecteur externe peut être présent chez un loueur de ski ou un centre d'étude du comportement du skieur afin de centraliser les informations captées sur chaque ski, ou peut être accessible directement par l'utilisateur lui-même par utilisation d'un appareil de type « Smartphone » par exemple.

Ainsi, le lecteur externe peut extraire les comptes **T** et **M** pour obtenir une information liée à la durée d'utilisation de la planche de glisse et/ou à l'amplitude des déformations de ladite surface **12** et/ou pour calculer la puissance mécanique générée par l'utilisateur et en particulier par le skieur.

L'intégration d'un tel système d'analyse à une planche de glisse **25** est décrit dans la suite de la description. Dans la description qui va suivre, les termes relatifs tels que « avant », « arrière », « supérieur », « inférieur », sont définis par rapport à la planche de glisse **25.** Plus précisément, ces termes sont définis par rapport à un axe longitudinal, un axe transversal et un axe vertical de la planche de glisse **25,** l'axe longitudinal étant l'axe selon lequel une longueur maximale de la planche de glisse **25** est mesurée, l'axe vertical étant l'axe orthogonal au plan de la planche de glisse **25** et l'axe transversal étant orthogonal à la fois à l'axe longitudinal et à l'axe vertical. Les termes « avant » et « arrière » sont définis le long de l'axe longitudinal de la planche de glisse **25,** par rapport à la position du skieur ou de la fixation. Les termes « supérieur » et « inférieur » sont définis le long de l'axe vertical de la planche de glisse **25,** avec la partie inférieure étant destinée à être au contact de la neige, du sol ou de l'eau.

L'invention est illustrée en particulier sur les figures 5 à 13 sur une planche de ski qui est un ski alpin ou un ski de randonnée.

La figure 5 illustre une planche de glisse **25** présentant une partie avant **27,** une partie arrière **28** et une zone centrale **26** destinée au montage de la fixation, disposée entre ces deux parties **27, 28.** La partie avant **27** fait référence à la partie de la planche de glisse **25** qui est normalement positionnée devant le skieur et qui forme la spatule alors que la partie arrière **28** fait référence à la partie de la planche de glisse **25** qui est normalement positionnée derrière le skieur et qui forme le talon de la planche de glisse **25.**

Les éléments de fixation, non représentés, sont montés sur un élément d'interface qui est composé, dans le mode de réalisation illustré, de rails de montage et de guidage **30** et **31,** les éléments de fixation pouvant coulisser sur ces rails pour être réglés à la longueur de la chaussure du skieur. Ces rails de montage sont solidarisés à la face supérieure de la planche de glisse **25.** Cette fixation est orientée de sorte que le skieur soit orienté vers la partie avant **27** dans le sens de la descente. Dans une variante non représentée, l'élément interface peut être composé d'au moins une plaque sur laquelle sont fixés les éléments de fixation, ceci permettant de surélever les éléments de fixation par rapport à la surface supérieure de la planche de glisse **25.**

La planche de glisse **25** présente une forme profilée adaptée à la pratique du ski sur neige. En variante, tous les types de planche de glisse **25** peut être utilisés sans changer l'invention.

La fixation, non représentée, comporte une butée avant destinée à être positionnée dans le rail avant **30,** pour fixer la partie avant de la chaussure du skieur, et une talonnière arrière destinée à être positionnée dans le rail arrière **31,** pour fixer l'arrière de la chaussure du skieur. Cette butée avant et cette talonnière arrière forment les éléments de fixation de la chaussure sur la planche de glisse.

En variante, la forme, le type de fixation, le type de rails ou interface de montage de la fixation sur la planche de glisse peuvent également varier sans changer l'invention.

Dans le cas de la planche de glisse **25** de la figure 4, les zones **Z1** et **Z2** illustrent les deux zones dans lesquelles la planche de glisse **25** subit un maximum de déformation lors de la flexion de la planche de glisse **25** lors de son utilisation sur la neige.

Ces zones **Z1** et **Z2** sont également des zones dans lesquelles la planche de glisse **25** subit de forts risques de chocs. Par exemple, les deux skis d'un skieur peuvent se croiser dans ces zones **Z1** et **Z2**.

Pour récupérer l'énergie mécanique liée à la déformation de la planche de glisse **25**, l'invention propose d'utiliser au moins un élément piézoélectrique **11a-11b**. Dans le mode de réalisation illustré, ces éléments piézoélectriques **11a-11b** sont préférentiellement disposés entre le rail avant **30** supportant la butée de la fixation et la zone **Z1** subissant un maximum de déformation. Autrement dit, ces éléments piézoélectriques **11a-11b** sont positionnés très proche de la zone **Z1**, dans une zone où les déformations restent suffisantes, et où ils restent suffisamment protégés, en particulier des chocs extérieurs.

Il est néanmoins possible de positionner les éléments piézoélectriques **11a-11b** dans les zones de déformations maximales **Z1** et **Z2** sans changer l'invention. Dans ce cas, des éléments de protection pourront être ajoutés, en particulier sur les côtés latéraux des éléments piézoélectriques **11a-11b**.

L'énergie générée par ces éléments piézoélectriques **11a-11b** est transmise à un circuit électronique de traitement **15**. De préférence, tel qu'illustré sur les figures 5 et 6, ce circuit électronique de traitement **15** est disposé très proche des éléments piézoélectriques **11a-11b** ceci pour faciliter le branchement des fils électriques entre les éléments piézoélectriques **11a-11b** et le circuit électronique de traitement **15**.

En particulier, le circuit électronique de traitement **15** est monté dans un boitier positionné au-dessus des deux éléments piézoélectriques, à l'extrémité du rail de montage avant **30** de la butée de la fixation.

Dans d'autres modes de réalisation, non illustrés, le boitier électronique contenant le circuit électronique pourrait être monté en toute autre position de la planche de glisse **25**, de préférence proche de la zone montage des fixations **26**, à l'avant ou à l'arrière de cette zone, voire entre les éléments de fixation avant et arrière de la chaussure, voire à l'intérieur d'une plaque interposée entre la planche de glisse **25** et la fixation de ski.

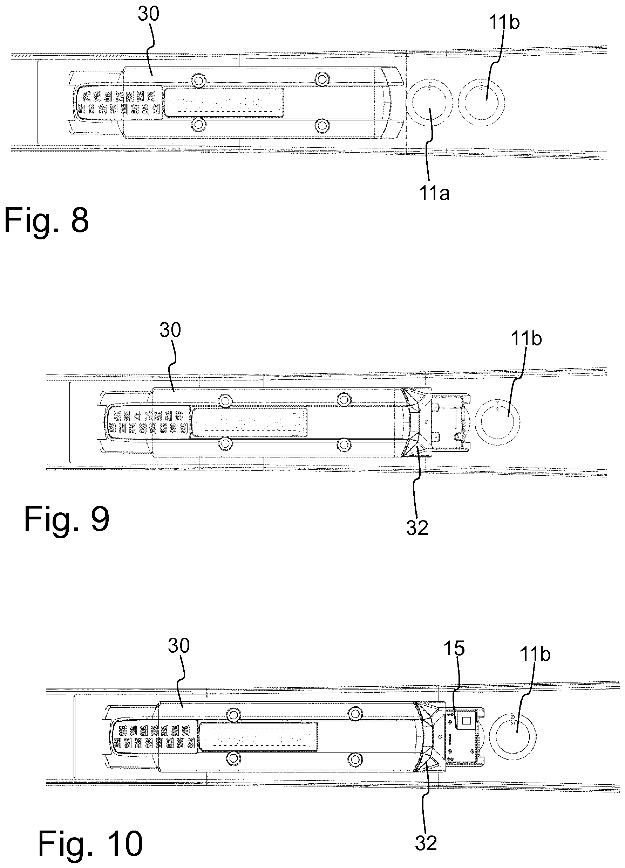

Les figures 8 à 11 illustrent le montage des éléments piézoélectriques **11a-11b** et du circuit électronique **15** sur la planche de glisse **25**. Comme illustrée sur la figure 8, les éléments piézoélectriques **11a-11b** sont solidarisés à la planche de glisse **25** et plus précisément sur une surface d'un élément de la planche de glisse, surface qui peut être interne ou externe à la planche de glisse. Ils peuvent être soit rapportés par collage après le moulage de la planche de glisse **25** sur l'une des couches de la structure de la planche de glisse **25**, soit être noyés et donc intégrés à l'intérieur de la structure de la planche de glisse **25** pendant le moulage de la planche de glisse **25**.

Les figures 8 à 11 illustrent l'agencement de deux éléments piézoélectriques **11a-11b** juxtaposés. En variante, un seul élément piézoélectrique peut être agencé. Le nombre d'éléments piézoélectriques **11a-11b** est choisi de telle façon que la récupération d'énergie soit suffisante pour alimenter le circuit électronique de traitement **15** associé.

Selon l'exemple illustré, chaque élément piézoélectrique **11a-11b** comporte une partie centrale circulaire supérieure formant la partie active du matériau piézoélectrique, configurée pour capter les déformations d'une surface **12** de la planche de glisse **25**, et une partie circulaire inférieure, disposée au-dessous de la partie centrale circulaire et de dimensions plus larges que celle-ci, formant une masse de référence.

Bien entendu, d'autres formes d'éléments piézoélectriques peuvent être utilisées, comme par exemple des éléments piézoélectriques en forme de quadrilatère. Une énergie électrique produite lors d'une déformation de la surface **12** de la planche de glisse **25** est captée entre la partie centrale circulaire supérieure et la partie circulaire inférieure. En variante, d'autres formes d'élément piézoélectrique **11a-11b** peuvent être utilisées sans changer l'invention. Il est à noter que l'énergie électrique produite par chaque élément piézoélectrique **11a, 11b** est proportionnelle au volume de matière piézoélectrique qu'il comprend.

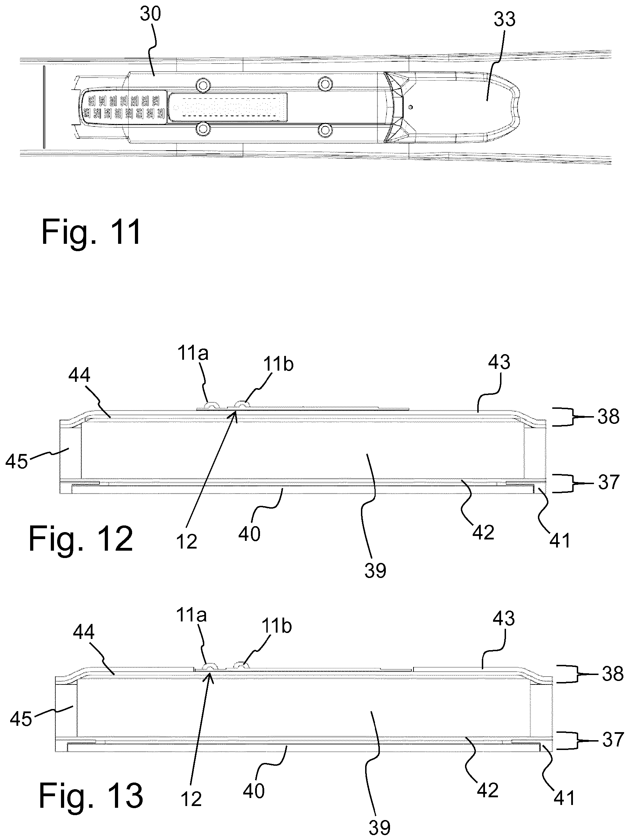

La structure interne de la planche de glisse **25** est décrit dans les paragraphes qui suivent en référence aux figures 12 et 13 afin d'illustrer l'intégration des éléments piézoélectriques **11a-11b** à la planche de glisse **25** et en particulier pour montrer sur quelle surface **12** de la planche de glisse **25** les éléments piézoélectriques peuvent être fixés.

La planche de glisse **25** comporte un ensemble inférieur **37**, et un ensemble supérieur **38**, séparés par un noyau **39**. Plus précisément, l'ensemble inférieur **37** comporte une semelle de glisse **40**, typiquement à base de polyéthylène, sur laquelle reposent latéralement les ailettes des carres métalliques **41**. Dans la forme illustrée, cet ensemble inférieur **37** inclut également une couche de renfort **42**.

La planche de glisse **25** inclut également un ensemble supérieur **38** comportant une couche de décoration et de protection **43**, reposant sur une couche de renfort **44**.

La couche de décoration et de protection **43** peut être réalisée de différentes manières, et inclure sur sa face inférieure des zones imprimées apparentes depuis la face supérieure de la planche, ou bien encore des zones transparentes, permettant de rendre apparente depuis l'extérieur la couche de renfort **44**. Les ensembles supérieur **38** et inférieur **37** sont séparés principalement par le noyau **39**, qui est bordé latéralement par les chants latéraux **45** qui protègent le noyau **39** de l'humidité extérieure, et qui assurent la transmission des efforts depuis l'ensemble supérieur à destination des carres **41.** Dans d'autres variantes de structures de planche de glisse **25,** non représentées, la structure pourrait ne pas comporter de chants latéraux, et être de type « coque » par exemple, ou encore pourrait comporter plusieurs couches de renfort, ou encore pourrait ne pas comporter de carres.

Dans le premier mode de réalisation de la figure 12, les éléments piézoélectriques **11a-11b** sont fixés directement sur la couche de décoration et de protection **43.** De préférence, les éléments piézoélectriques **11a-11b** sont fixés par collage sur la couche de décoration et de protection **43** ou sur la couche de support. Pour ce faire, il est préférable d'utiliser une colle rigide dont la résistance au cisaillement est importante, par exemple une colle époxy, ceci pour ne pas modifier et atténuer les valeurs réelles de déformations de la planche de glisse **25.** Toutefois, un élément adhésif de type double face, d'épaisseur très mince, créant peu de cisaillement à l'intérieur de cette couche, peut être envisagé.

Dans une variante de ce mode de réalisation, une couche de support rigide peut être fixée sur la couche de décoration et de protection **43** pour supporter les éléments piézoélectriques **11a-11b.** Par exemple, une couche de support en aluminium peut être utilisée.

Dans le second mode de réalisation de la figure 13, les éléments piézoélectriques **11a-11b** sont fixés sur la couche de renfort **44.** Pour ce faire, la couche de décoration et de protection **43** est évidée au niveau de la surface **12** de fixation des éléments piézoélectriques **11a-11b,** les éléments piézoélectriques étant disposés alors dans cet évidement. Comme dans le premier mode de réalisation de la figure 12, une fixation par collage des éléments piézoélectriques **11a-11b** peut être réalisée, soit pendant le moulage de la planche de glisse, soit après le moulage de la planche de glisse.

L'invention nécessite également le positionnement du circuit électronique **15** sur la planche de glisse **25.** Aussi, un support **32** est rapporté sur la planche de glisse **25** pour supporter le circuit électronique de traitement **15,** tel qu'illustré à la figure 9.

De préférence, ce support **32** est amovible de sorte à pouvoir effectuer une maintenance sur le circuit électronique de traitement **15** en désolidarisant le circuit électronique de traitement **15** de la planche de glisse **25.** Ce support **32** peut être lié par clipsage ou vissage avec la planche de glisse **25** ou le rail de montage **30** de la butée de la fixation. Par exemple, le support **32** peut comporter des ergots destinés à coopérer avec des alésages réalisés dans la partie avant du rail de montage **30.**

Ce support **32** définit également la position du circuit électronique de traitement **15** sur la planche de glisse **25.**

Dans l'exemple des figures 5 à 11, le circuit électronique de traitement **15** est disposé à l'avant du rail de montage avant **30** de la butée de la fixation et au-dessus des éléments piézoélectriques **11a-11b.** En variante, le circuit électronique **15** peut être disposé sur les éléments piézoélectriques **11a-11b** sans lien avec le rail de montage **30** ou la butée avant de la fixation, en étant fixé à la planche de glisse.

Par ailleurs, tel qu'illustré sur la figure 9, le circuit électronique de traitement **15** peut être vissé sur le support **32,** ou clipsé ou encore collé. Le circuit électronique de traitement **15** est ensuite connecté électriquement avec les éléments piézoélectriques **11a-11b** au moyen de fils ou d'une connectique adaptée.

Tel qu'illustré sur la figure 10, un capot de protection **33** est monté sur le support **32** de sorte à protéger le circuit électronique de traitement **15** et les éléments piézoélectriques **11a-11b.** Le capot de protection **33** peut également être fixé par vissage ou par collage par exemple avec le support **32.**

Aussi, l'ensemble formé par le support **32** et le capot de protection **33** forme un boitier recevant le circuit électronique de traitement **15** et ce boitier est de préférence étanche pour protéger les composants électroniques de la neige ou de l'eau, ce boitier étant facilement démontable de la planche de glisse.

Ce capot de protection **33** présente préférentiellement une forme aérodynamique pour limiter la prise au vent de la planche de glisse **25** et limiter le risque de choc sur le circuit électronique de traitement **15** ou les éléments piézoélectriques **11a-11b.**

Dans l'exemple illustré, le système d'analyse est composé d'un boitier contenant les éléments électroniques de traitement rapportés sur la planche de glisse et d'éléments piézoélectriques indépendants du boitier lié à la planche de glisse, connectés à l'électronique.

Dans une autre réalisation non illustrée, le système d'analyse pourrait être composé d'un seul boitier qui contiendrait les éléments électroniques de traitement et qui présenterait sous sa surface inférieure une couche incluant les éléments piézoélectriques, connectés à l'électronique. Cet ensemble serait alors solidarisé à l'une des surfaces de la planche de glisse.

Dans le cas d'une planche de glisse **25** qui est un ski de fond, la localisation des éléments piézoélectriques et du boitier électronique de traitement peut être similaire à celle proposée pour le ski alpin, ou il peut être avantageux de positionner les éléments piézoélectriques plus en avant de la butée avant de la fixation de quelques centimètres, voire de quelques dizaines de centimètres pour obtenir plus d'amplitude de déformations. Ce système d'analyse sera tout à fait utilisable dans le cas d'un ski de fond du fait de son très faible poids, de l'ordre de 10 à 50g, apporté par les composants du système d'analyse.

Dans le cas d'une planche de glisse **25** qui est un snowboard supportant alors les deux pieds de l'utilisateur, la planche de glisse **25** serait munie de deux fixations distinctes. Les éléments piézoélectriques ainsi que le boitier électronique de traitement pourraient être positionnés sur le côté latéral de l'une ou de l'autre des fixations, du côté des extrémités de la planche, ou pourraient être positionnés entre les deux fixations, dans une zone relativement protégée.

Cette invention associant éléments piézoélectriques **11a-11b** et circuit électronique de traitement **15** présente l'avantage de stocker les données **T,** représentant le temps réel d'utilisation de la planche de glisse **25,** et **M** représentant l'intensité de l'utilisation de la planche de glisse **25,** ces données étant issues de la planche de glisse **25** lors des sollicitations de la planche de glisse **25.**

La mise en route de l'analyse est automatique dès que la planche de glisse **25** est en mouvement et l'utilisateur n'a pas à se soucier ni de la mise en route du système, ni de son alimentation, ni du rechargement électrique du système, étant donné que le circuit électronique de traitement **15** est autonome car alimenté directement par les capteurs piézoélectriques **11a-11b.** L'utilisateur peut ensuite accéder aux données **T, M** enregistrées dans la mémoire **19** embarquée sur la planche de glisse **25,** ceci ultérieurement, lorsque la planche de glisse **25** n'est plus utilisée.

Ainsi, l'invention présente l'utilisation d'au moins un élément piézoélectrique **11a-11b:**

- qui est à la fois générateur d'énergie électrique pour le circuit électronique de traitement **15,**
- et qui est également un capteur de mesure des déformations de la planche de glisse dans le sens où la tension **Vpa, Vpb** délivrée par l'au moins un élément piézoélectrique **11a-11b** est utilisée par le circuit électronique de traitement **15** qui est configuré pour estimer des valeurs représentatives de l'utilisation de la planche de glisse, telles qu'une durée d'utilisation et/ou un niveau d'amplitude des déformations de la planche de glisse à partir de la tension **Vpa, Vpb** délivrée.

## Revendications

1. Système d'analyse (100) d'une utilisation d'une planche de glisse (25) comportant :

   - au moins un élément piézoélectrique (11a-11b) destiné à être solidarisé à ladite planche de glisse (25) et destiné à générer une énergie électrique lors des déformations de ladite planche de glisse (25); et
   - un circuit électronique de traitement (15) configuré pour estimer au moins un paramètre d'utilisation de ladite planche de glisse et destiné à être relié à ladite planche de glisse (25) ;

   ou ledit circuit électronique de traitement (15) est alimenté par ladite énergie électrique générée par ledit au moins un élément piézoélectrique (11a-11b), **caractérisé en ce que** l'estimation de l'au moins un paramètre d'utilisation de ladite planche de glisse réalisée par ledit circuit électronique de traitement (15) est déterminée en fonction de ladite énergie électrique générée par ledit au moins un élément piézoélectrique (11a-11b), ledit circuit électronique de traitement (15) étant configuré pour obtenir au moins un paramètre lié à l'utilisation de ladite planche de glisse (25) en utilisant uniquement l'énergie produite par ledit au moins un élément piézoélectrique, c'est-à-dire sans utiliser une source d'alimentation différente dudit au moins un élément piézoélectrique (11a-11b).

2. Système d'analyse selon la revendication 1, **caractérisé en ce que** ledit circuit électronique de traitement (15) comporte :

   - au moins un élément de stockage capacitif (Cs) destiné à stocker au moins une partie de ladite énergie électrique (Vpa, Vpb) générée par ledit au moins un élément piézoélectrique (11a-11b).

3. Système d'analyse selon l'une des revendications 1 à 2, **caractérisé en ce que** ledit circuit électronique de traitement (15) est configuré pour estimer une durée d'utilisation (T) de la planche de glisse (25) et/ou pour estimer une image (M) de l'énergie mécanique imposée à la planche de glisse (25).

4. Système d'analyse selon les revendications 2 et 3, **caractérisé en ce que** ledit circuit électronique de traitement (15) comporte un organe de gestion (18) configuré pour incrémenter au moins un compte binaire (T, M) lorsque la tension (Vcs) aux bornes dudit élément de stockage capacitif (Cs) atteint une valeur seuil (S 1h) ou une valeur de référence maximale (REFmax) de sorte que ledit au moins un compte binaire (T, M) représente la durée d'utilisation (T) de la planche de glisse (25) et/ou l'image (M) de l'énergie mécanique imposée à la planche de glisse (25).

5. Système d'analyse selon la revendication 4, **caractérisé en ce que** le circuit électronique de traitement (15) comprend une mémoire non volatile (19) connectée audit organe de gestion (18), et **en ce que** ledit organe de gestion est configuré pour inscrire en mémoire ledit au moins un compte binaire (T, M).

6. Système d'analyse selon la revendication 4 ou 5, **caractérisé en ce que** ledit organe de gestion (18) comporte une horloge interne, ledit organe de gestion (18) étant configuré pour incrémenter un compte temporel (T) à chaque période de ladite horloge interne dès lors que l'organe de gestion (18) est sous tension.

7. Système d'analyse selon la revendication 4 ou 5, **caractérisé en ce que** ledit circuit électronique (15) comporte :

   - un oscillateur (16) destiné à produire un signal périodique, et
   - un compteur (17) connecté audit oscillateur (16), configuré pour incrémenter ledit au moins un compte binaire (T) représentant la durée d'utilisation (T) de la planche de glisse (25), dit compte temporel (T), à chaque période du signal périodique produit par ledit oscillateur (16) ;
   - ledit compte temporel (T) étant accessible à l'organe de gestion (18).

8. Système d'analyse selon l'une des revendications 1 à 7 prise en combinaison avec la revendication 2, **caractérisé en ce que** ledit circuit électronique de traitement (15) comporte au moins un comparateur à hystérésis (22, 22a) configuré pour comparer la tension aux bornes dudit élément de stockage capacitif (Cs) à au moins deux valeurs seuils (S0b, S0h, S1b, S1h).

9. Procédé d'analyse de l'utilisation d'une planche de glisse (25) mis en oeuvre par le système tel que défini selon la revendication 5, **caractérisé en ce qu'**en fonction de la tension (Vcs) aux bornes dudit élément de stockage capacitif (Cs), ledit organe de gestion (18) est configuré pour inscrire ledit compte temporel (T) et/ou ledit compte d'activation (M) dans la mémoire non volatile (19).

10. Planche de glisse (25) **caractérisée en ce qu'**elle comporte un système d'analyse d'une utilisation de ladite planche de glisse (25) selon l'une des revendications 1 à 8.

11. Planche de glisse selon la revendication 10, **dans laquelle** ladite planche de glisse (25) comporte des éléments de fixation montés entre une extrémité avant (27) et une extrémité arrière (28) de ladite planche de glisse (25), ledit au moins un élément piézoélectrique (11a-11b) étant disposé entre lesdits éléments de fixation et ladite extrémité avant (27) de ladite planche de glisse (25).

12. Planche de glisse selon la revendication 10 ou 11, **dans laquelle** ladite planche de glisse (25) comporte plusieurs couches structurelles :

   - un ensemble inférieur (37) comportant une semelle (40) destinée à entrer au contact avec une surface de glisse et au moins une couche de renfort (42) ;
   - un ensemble supérieur (38) comportant au moins une couche de renfort (44) ; et
   - un noyau (39) interposé entre les ensembles supérieur (38) et inférieur (37) ;

   ledit au moins un élément piézoélectrique (11a-11b) étant disposé au contact d'au moins une couche de renfort (42,44).

13. Planche de glisse selon la revendication 12, **dans laquelle,** ledit ensemble supérieur (38) comportant une couche de protection et/ou de décoration (43), ladite planche de glisse (25) comporte une ouverture de ladite couche de protection et de décoration (43) dans laquelle est positionné ledit au moins un élément piézoélectrique (11a-11b).

14. Planche de glisse selon la revendication 10 ou 11, **dans laquelle,** ladite planche de glisse (25) comporte une couche de protection et/ou de décoration, ledit au moins un élément piézoélectrique (11a-11b) étant disposé au contact de cette couche de protection et/ou de décoration.

15. Planche de glisse selon l'une des revendications 10 à 14, **dans laquelle** ledit circuit électronique (15) est monté sur ladite planche de glisse (25) dans un boitier de protection (32-33).

16. Planche de glisse selon la revendication 15, **dans laquelle** ledit boitier de protection (32-33) est monté de manière amovible sur ladite planche de glisse (25).

17. Planche de glisse selon la revendication 15 ou 16, **dans laquelle** ladite planche de glisse (25) comporte au moins un élément d'interface entre la surface supérieure de la planche de glisse (25) et les éléments de fixation, ledit boitier de protection (32-33) étant fixé audit au moins élément interface.

**Patentansprüche**

1. System zur Analyse (100) einer Nutzung eines Gleitbretts (25), das Folgendes umfasst:

   - mindestens ein piezoelektrisches Element (11a-11b), das dazu bestimmt ist, fest mit dem Gleitbrett (25) verbunden zu werden und bei Verformungen des Gleitbretts (25) elektrische Energie zu erzeugen; und
   - eine elektronische Verarbeitungsschaltung (15), die so konfiguriert ist, dass sie mindestens einen Parameter für die Nutzung des Gleitbretts ermittelt, und die Verbindung mit dem Gleitbrett (25) herstellt;

   die elektronische Verarbeitungsschaltung (15) durch die von dem mindestens einen piezoelektrischen Element (11a-11b) erzeugte elektrische Energie gespeist wird, **dadurch gekennzeichnet, dass** die von der elektronischen Verarbeitungsschaltung (15) durchgeführte Ermittlung des mindestens einen Nutzungsparameters des Gleitbretts in Abhängigkeit von der elektrischen Energie bestimmt wird, die von dem mindestens einen piezoelektrischen Element (11a-11b) erzeugt wird;

   wobei die elektronische Verarbeitungsschaltung (15) so konfiguriert ist, dass sie mindestens einen mit der Benutzung des Gleitbretts (25) verbundenen Parameter erzielt, indem sie nur die von dem mindestens einen piezoelektrischen Element erzeugte Energie nutzt, d. h. ohne eine andere Stromquelle als das mindestens eine piezoelektrische Element (11a-11b) zu verwenden.

2. Analysesystem nach Anspruch 1, **dadurch gekennzeichnet, dass** die genannte elektronische Verarbeitungsschaltung (15) Folgendes umfasst:

   - mindestens ein kapazitives Speicherelement (Cs) zum Speichern mindestens eines Teils der elektrischen Energie (Vpa, Vpb), die von dem mindestens einen piezoelektrischen Element (11a-11b) erzeugt wird.

3. Analysesystem nach einem der Ansprüche 1 bis 2, **dadurch gekennzeichnet, dass** die elektronische Verarbeitungsschaltung (15) so konfiguriert ist, dass diese eine Nutzungsdauer (T) des Gleitbretts (25) und/oder ein Bild (M) der mechanischen Energie, die dem Gleitbrett (25) auferlegt wird, ermittelt.

4. Analysesystem nach einem der Ansprüche 2 und 3, **dadurch gekennzeichnet, dass** die elektronische Verarbeitungsschaltung (15) ein Steuerorgan (18) umfasst, das so konfiguriert ist, dass es mindestens einen binären Zählstand (T, M) erhöht, wenn die Spannung (Vcs) an den Klemmen des kapazitiven Speicherelements (Cs) einen Schwellenwert (Slh) oder einen maximalen Referenzwert (REFmax) erreicht, sodass der mindestens eine binäre Zählstand (T, M) die Nutzungsdauer (T) des Gleitbretts (25) und/oder das Bild (M) der mechanischen Energie darstellt, die dem Gleitbrett (25) auferlegt wird.

5. Analysesystem nach Anspruch 4, **dadurch gekennzeichnet, dass** die elektronische Verarbeitungsschaltung (15) einen nichtflüchtigen Speicher (19) umfasst, der mit dem Steuerorgan (18) verbunden ist und dass das Steuerorgan so konfiguriert ist, dass es den mindestens einen binären Zählstand (T, M) in den Speicher aufnimmt.

6. Analysesystem nach Anspruch 4 oder 5, **dadurch gekennzeichnet, dass** das Steuerorgan (18) einen internen Taktgeber umfasst, wobei das Steuerorgan (18) so konfiguriert ist, dass es bei jeder Periode des internen Taktgebers einen Zeitzählstand (T) inkrementiert, sobald das Steuerorgan (18) unter Spannung steht.

7. Analysesystem nach Anspruch 4 oder 5, **dadurch gekennzeichnet, dass** die elektronische Schaltung (15) Folgendes umfasst:

   - einen Oszillator (16), der dazu bestimmt ist, ein periodisches Signal zu erzeugen, und
   - einen mit dem Oszillator (16) verbundenen Zähler (17), der so konfiguriert ist, dass er den mindestens einen binären Zählstand (T), der die Nutzungsdauer (T) des Gleitbretts (25) darstellt, den sogenannten Zeitzählstand (T), bei jeder Periode des vom Oszillator (16) erzeugten periodischen Signals inkrementiert;
   - wobei der Zeitzählstand (T) für das Steuerorgan (18) zugänglich ist.

8. Analysesystem nach einem der Ansprüche 1 bis 7 in Kombination mit Anspruch 2, **dadurch gekennzeichnet, dass** die elektronische Verarbeitungsschaltung (15) mindestens einen Hysteresekomparator (22, 22a) aufweist, der so konfiguriert ist, dass er die Spannung an den Klemmen des kapazitiven Speicherelements (Cs) mit mindestens zwei Schwellenwerten (SOb, SOh, S1b, S1h) vergleicht.

9. Verfahren zur Analyse der Nutzung eines Gleitbretts (25), die von dem System, wie es nach Anspruch 5 definiert ist, durchgeführt wird, **dadurch gekennzeichnet, dass** das Steuerorgan (18), in Abhängigkeit von der Spannung (Vcs) an den Klemmen des kapazitiven Speicherelements (Cs), so konfiguriert ist, dass es den Zeitzählstand (T) und/oder den Aktivierungsstand (M) in den nichtflüchtigen Speicher (19) aufnimmt.

10. Gleitbrett (25), **dadurch gekennzeichnet, dass** es ein System zur Analyse der Nutzung des Gleitbretts (25) nach einem der Ansprüche 1 bis 8 umfasst.

11. Gleitbrett nach Anspruch 10, **wobei** das Gleitbrett (25) Befestigungselemente aufweist, die zwischen einem vorderen Ende (27) und einem hinteren Ende (28) des Gleitbretts (25) angebracht sind, und das mindestens eine piezoelektrische Element (11a-11b) zwischen den Befestigungselementen und dem vorderen Ende (27) des Gleitbretts (25) angeordnet ist.

12. Gleitbrett nach Anspruch 10 oder 11, **wobei** das Gleitbrett (25) mehrere Strukturschichten aufweist:

    eine untere Baugruppe (37) mit einer Sohle (40), die dazu bestimmt ist, mit einer Gleitfläche in Kontakt zu treten, und mindestens einer Verstärkungsschicht (42);
    - eine obere Baugruppe (38) mit mindestens einer Verstärkungsschicht (44); und
    - einen Kern (39), der zwischen der oberen (38) und der unteren (37) Baugruppe angeordnet ist;
    wobei das mindestens eine piezoelektrische Element (11a-11b) in Kontakt mit mindestens einer Verstärkungsschicht (42, 44) angeordnet ist.

13. Gleitbrett nach Anspruch 12, **wobei** die obere Baugruppe (38) eine Schutz- und/oder Dekorationsschicht (43) umfasst und das Gleitbrett (25) auf Grund dessen eine Öffnung der Schutz- und Dekorationsschicht (43) aufweist, in der das mindestens eine piezoelektrische Element (11a-11b) positioniert ist.

14. Gleitbrett nach Anspruch 10 oder 11, **wobei** das Gleitbrett (25) eine Schutz- und/oder Dekorationsschicht aufweist und das mindestens eine piezoelektrische Element (11a-11b) in Kontakt mit dieser Schutz- und/oder Dekorationsschicht angeordnet ist.

15. Gleitbrett nach einem der Ansprüche 10 bis 14, **wobei** die elektronische Schaltung (15) auf dem Gleitbrett (25) in einem Schutzgehäuse (32-33) montiert ist.

16. Gleitbrett nach Anspruch 15, **wobei** das Schutzgehäuse (32-33) abnehmbar an dem Gleitbrett (25) angebracht ist.

17. Gleitbrett nach Anspruch 15 oder 16, **wobei** das Gleitbrett (25) mindestens ein Schnittstellenelement zwischen der oberen Fläche des Gleitbretts (25) und den Befestigungselementen aufweist, wobei das Schutzgehäuse (32-33) an dem mindestens einen Schnittstellenelement befestigt ist.

## Claims

1. A system for analysis (100) of use of a sliding board (25) comprising:

   - at least one piezoelectric element (11a-11b) intended to be secured to said sliding board (25) and intended to generate electric energy during deformations of said sliding board (25); and
   - an electronic processing circuit (15) configured for estimating at least one parameter of use of said sliding board and intended to be connected to said sliding board (25);

   said electronic processing circuit (15) being powered by said electric energy generated by said at least one piezoelectric element (11a-11b),
   **characterized in that** the estimation of the at least one usage parameter of said sliding board done by said electronic processing circuit (15) is determined depending on said electrical energy generated by said at least one piezoelectric element (11a-11b), said electronic processing circuit (15) being configured to obtain at least one parameter related to the use of said sliding board (25) using only the energy produced by said at least one piezoelectric element, that is to say without using a power source other than said at least one piezoelectric element (11a-11b).

2. The analysis system according to claim 1, **characterized in that** said electronic processing circuit (15) comprises:

- at least one capacitive storage element (Cs) intended to store at least a portion of said electric energy (Vpa, Vpb) generated by said at least one piezoelectric element (1 1a-1 1b).

3. The analysis system according to one of claims 1 to 2, **characterized in that** said electronic processing circuit (15) is configured for estimating a length of use (T) of the sliding board (25) and/or for estimating an image (M) of the mechanical energy imposed on the sliding board (25).

4. The analysis system according to claims 2 and 3, **characterized in that** said electronic processing circuit (15) comprises a management member (18) configured for incrementing at least one binary count (T, M) when the voltage (Vcs) at the terminals of said capacitive storage element (Cs) reaches a threshold value (S1h) or a maximum reference value (REFmax) such that said at least one binary count (T, M) represents the length of use (T) of the sliding board (25) and/or an image (M) of the mechanical energy imposed on the sliding board (25).

5. The analysis system according to claim 4, **characterized in that** the electronic processing circuit (15) comprises a nonvolatile memory (19) connected to said management member (18), where said management member is configured for writing said at least one binary count into memory (T, M).

6. The analysis system according to claim 4 or 5, **characterized in that** said management member (18) comprises an internal clock, where said management member (18) is configured for incrementing a time count (T) for each period of said internal clock as soon as the management member (18) is powered.

7. The analysis system according to claim 4 or 5, **characterized in that** said electronic circuit (15) comprises:

   - an oscillator (16) intended to produce a periodic signal; and
   - a counter (17) connected to said oscillator (16), configured to increment said at least one binary count (T) representing the length of use of the sliding board (25), referred to as time count (T), at each period of the periodic signal produced by said oscillator (16);
   - where said time count (T) is accessible to the management member (18).

8. The analysis system according to one of claims 1 to 7 taken in combination with claim 2, **characterized in that** said electronic processing circuit (15) comprises at least one comparator with hysteresis (22, 22a) configured for comparing the voltage at the terminals of said capacitive storage element (Cs) with at least two threshold values (S0b, S0h, S1b, S1h).

9. A method for analysis of the use of a sliding board (25) implemented by the system such as defined according to claim 5, **characterized in that** depending on the voltage (Vcs) at the terminals of said capacitive storage element (Cs), said management member (18) is configured for writing said time count (T) and/or said activation count (M) in the nonvolatile memory (19).

10. A sliding board (25) **characterized in that** it comprises a system for analysis of use of said sliding board (25) according to one of claims 1 to 8.

11. The sliding board according to claim 10, **wherein** said sliding board (25) comprises binding elements mounted between a front end (27) and a rear end (28) of said sliding board (25), where said at least one piezoelectric element (11a-11b) is arranged between said binding elements and said front end (27) of said sliding board (25).

12. The sliding board according to claim 10 or 11, wherein said sliding board (25) comprises several structural layers:

   - a lower assembly (37) comprising at least one bottom (40) intended to come into contact with a sliding surface and at least one reinforcing layer (42);
   - an upper assembly (38) comprising at least one reinforcing layer (44); and
   - a core (39) interposed between the upper (38) and lower (37) assemblies;

   where said at least one piezoelectric element (11a-11b) is disposed in contact with at least one reinforcing layer (42, 44).

13. The sliding board according to claim 12, **wherein** said upper assembly (38) comprises a protective and/or decorative layer (43), said sliding board (25) comprises an opening in said protective and decorative layer (43) in which said at least one piezoelectric element is positioned (11a-11b).

**14.** The sliding board according to claim 10 or 11, **wherein** said sliding board (25) comprises a protective and/or decorative layer, where said at least one piezoelectric element (1 1a-1 1b) is disposed in contact with this protective and/or decorative layer.

**15.** The sliding board according to one of claims 10 to 14, **wherein** said electronic circuit (15) is mounted on said sliding board (25) in a protective case (32-33).

**16.** The sliding board according to claim 15, **wherein** said protective case (32-33) is mounted removably on said sliding board (25).

**17.** The sliding board according to claim 15 or 16, **wherein** said sliding board (25) comprises at least one interface element between the upper surface of the sliding board (25) and the binding elements, where said protective case (32-33) is attached to said at least one interface element.

Fig. 1

Fig. 2

Fig. 3a

Fig. 3b

Fig. 3c

Fig. 3d

Fig. 3e

Fig. 4a

Fig. 4b

Fig. 4c

Fig. 4d

Fig. 4e

27

Z1

10

30

26

31

25

Z2

Fig. 5

28

27

11a-11b

10

30

Fig. 6

33

15

34

30

32

Fig. 7

Fig. 8

Fig. 9

Fig. 10

Fig. 11

Fig. 12

Fig. 13

**EP 3 513 846 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5590908 A
- EP 0841969 A
- WO 2011160040 A
- US 2005192129 A